# EUROPÄISCHE PATENTSCHRIFT

(11) **EP 4 701 407 B1**
(45) Veröffentlichungstag und Bekanntmachung des Hinweises auf die Patenterteilung: **04.11.2026**
(21) Anmeldenummer: 24728470.6
(22) Anmeldetag: 22.04.2024
(51) Int. Cl.: A01K 1/00

(54) **MOBILE EINRICHTUNG ZUR HALTUNG GROSSER NUTZTIERE UND VERFAHREN ZU DEREN INSTALLATION**
MOBILE DEVICE FOR KEEPING LARGE LIVESTOCK AND METHOD FOR SETTING IT UP
INSTALLATION MOBILE POUR L'ÉLEVAGE DE GROS ANIMAUX D'ÉLEVAGE ET PROCÉDÉ POUR SON INSTALLATION

(30) Priorität: 24.04.2023 DE 102023110441
(43) Veröffentlichungstag der Anmeldung: 04.03.2026
(73) Patentinhaber: Pröbsting, Andre, 44267 Dortmund (DE)
(72) Erfinder: Pröbsting, Andre, 44267 Dortmund (DE)
(74) Vertreter: Osterhoff, Utz
(86) Internationale Anmeldenummer: PCT/DE2024/100360
(87) Internationale Veröffentlichungsnummer: WO 2024/223003

(56) Entgegenhaltungen:
- EP-A1- 3 248 458
- CN-A- 107 853 184
- DE-A1- 1 930 489
- DE-A1- 10 224 378
- US-A1- 2021 400 908

## Beschreibung

Die Erfindung betrifft eine mobile Einrichtung zur artgerechten sowie nachhaltigen Tierhaltung in natürlicher Umgebung sowie ein Verfahren zur Einrichtung einer solchen mobilen Einrichtung. Vor allem betrifft dies die Haltung großer Nutztiere wie Rinder, Pferde, Ziegen, Büffel, Alpakas, Bisons, Kamele, Schweine, Esel, Lamas, Schafe und Wildtiere. Der wesentliche Effekt der Erfindung ist die sach- und artgerechte Ausgestaltung, die Ausstattung, der Aufbau, die Versorgungsfunktionen und die Nutzaufgabe der mobilen Einrichtung. Ganzjährig stellt das den Tieren neben dem Weidegang alles zur Verfügung, was die Natur, etwa vegetationsbedingt oder aufgrund von Parzellierung der Weidegründe, nicht geben kann.

Die Tierhaltung ist gegenwärtig in intensive und extensive Haltungsformen geteilt, was in beiden Fällen zu spezifischen Problemen führt.

Bei der intensiven Haltungsform sind die Tiere überwiegend in den Stallungen gebunden. Es gibt Stallungen mit oder ohne Auslauf. Dabei handelt es sich um einen unnatürlichen Lebensraum. Dadurch werden die natürlich veranlagten Verhaltensweisen, Bedürfnisse und Bewegungsabläufe vermindert und unterdrückt. Das schränkt das Wohlergehen sowie die Gesundheit der Tiere ein und führt zu negativen Folgeerscheinungen. Nur vereinzelt gibt es Weidegänge in natürlicher Umgebung. In dieser Haltungsform werden die Tiere überwiegend mit Grund- und Kraftfutter gefüttert, welches unter Einsatz von Düngemitteln auch weit vom Fütterungsort angebaut wird und transportiert werden muss.

Transport und Düngemittel erfordern viel Energie, was zu hohem Kohlendioxid-Anfall (C02) führt. Außerdem führen die Stickstoffdünger bei der Verstoffwechselung zu viel Lachgas (N20), und das unphysiologische Kraftfutter führt bei Grasfressern zum Anfall von Methan (CH4), welches ausgestoßen wird. C02, N20 und CH4 gelten als hochwirksame Beschleuniger für die Klimaerwärmung.

Die Fäkalien der Tiere sind sehr nährstoffreich und können nur schlecht als natürlicher Flüssigdünger auf Felder aufgebracht werden, es sei denn, man nimmt auch eine Eutrophierung von Boden und Gewässern in Kauf, außerdem ist ein Kompostieren meist nicht möglich. In den Stallungen beeinträchtigen die Schadstoffe und angelockte Fliegen die Gesundheit der Tiere. Krankheiten können sich leicht verbreiten. Die extensive Haltungsform kommt in der Regel nicht ohne Tiersammelstellen aus, was an diesen Stellen zur Bodenüberlastung führt. Des Weiteren werden die Tiere in den Wintermonaten witterungsbedingt und aufgrund fehlender Vegetation oft in festen Gebäuden und Stallungen untergebracht, welche wiederum keinen natürlichen Lebensraum darstellen. Daneben gibt es Haltungsformen, vor allem bei Fleischnutzungsrindern, die ganzjährig im Freien leben können und lediglich in vegetationsarmen Phasen der Zufütterung bedürfen.

Hierbei sind auch gemischte Herden mit unterschiedlichem Großvieh bekannt. Anstelle einer regelmäßigen Fütterung findet überwiegend Weidewirtschaft statt. Bei gemischten Herden können dabei die Herden so zusammengestellt werden, dass die Weidefläche auch bei verschiedenem Gräserbewuchs je nach Vor- lieben der Tiere abgegrast wird. Dies entspricht dem natürlichen Verhalten von wandernden Steppenbewohnern.

Diese Bewirtschaftungsform hat den großen Vorteil, dass nicht nur kaum Klimagase entstehen, sondern dass die Beweidung bei den Pflanzen einen Wurzelbildungsreflex auslöst, der pro Jahr zu einer Aufnahme von ca. einer halben Tonne C02 pro Hektar Weidefläche führt. Dafür hat die Beweidung so zu erfolgen, dass den beweideten Gräsern und Kräutern entsprechende Regenerationsphasen zugestanden werden müssen. Sind diese zu kurz, findet die C02-Einlagerung in den Boden nicht statt, sind sie dagegen zu lang, blühen die Gräser und Kräuter und stellen das weitere Wurzeln ein mit der Folge, dass ebenfalls weniger C02 als Wurzelmasse eingelagert wird, als möglich wäre.

Es ist also ein Beweidungsmanagement erforderlich, welches dem natürlichen Wanderungsverhalten großer Herden entspricht. Obwohl ca. 40 Prozent der weltweiten bewirtschaftbaren Flächen hierfür geeignetes Grasland sind, stößt dies in einer parzellierten und von Straßen und Schienen durchzogenen Welt, in der jeder Flecken Erde einen Eigentümer hat und Verwaltungsvorschriften unterworfen ist, auf Vorbe- halte und Hindernisse. Die Lösung kann nur lauten: Die Unterkunft wandert mit, es braucht eine mobile Einrichtung, die alle Versorgungsfunktionen und alle Vorschriften erfüllt. Diese sollte sach- und artgerecht ausgestattet und aufgebaut, mit leichten landwirtschaftlichen Maschinen befahrbar und so stabil ausgeführt sein, dass auch schwere und kräftige Tiere sicher untergebracht sind.

Im Stand der Technik sind bereits einige Lösungsversuche beschrieben worden. So beschreibt die EP 1 002 461 A1 einen mobilen Schweinestall mit einem Spaltenboden, der mit einem Schlammsumpf ausgestattet ist, ferner mit Seitenwänden, einem Dach und Belüftungseinrichtungen mit kontrollierter Luftzufuhr und Luftabfuhr. Auch Stallungen und Fütterungseinrichtungen können vorgesehen werden. Zum Versetzen des mobilen Stalls ist eine Demontage erforderlich, er kann nicht als ganzer Stall bewegt oder versetzt werden.

Die FR 2 496 401 beschreibt einen kleinen mobilen Stall, der vor allem der Unterbringung von Pferden dient. Sein Aufbau entspricht einem straßentauglichen Pferdeanhänger zum Transport von Pferden, der zusätzlich über Einrichtungen eines Pferdestalls verfügt wie z.B. eine Futterstation. Der Stall kann nicht mit landwirtschaftlichen Maschinen oder Geräten befahren werden.

Die WO 2000 059 296 A1 beschreibt einen verfahrbaren Geflügelstall mit ausklappbaren Seitenwänden und mit einem Scharrboden mit einer Scharrwanne. Dadurch wird verhindert, dass die Tiere außerhalb des Geflügelstalls Schmutz aufnehmen und in den Geflügelstall eintragen und damit die Eier verschmutzen. Die Scharrwanne ist dabei so dicht über dem Boden angeordnet, dass keine Hühner unter die Scharrwanne gelangen können. Nach dem Einklappen von Seitenwänden und seitlichen Scharrböden kann der Geflügelstall auf öffentlichen Straßen bewegt werden. Mehrere derartige Geflügelställe können, während sie stehen, längs nach Art eines Zuges miteinander verbunden werden, um einen großen Geflügelstall zu bilden, was wirtschaftliche Vorteile bietet. Der Stall selbst kann jedoch nicht mit landwirtschaftlichen Maschinen befahren werden.

Die DE 20 2017 007 021 U1 beschreibt eine überwölbte Freilandhaltung für Milchkühe mit Laufstallsystemen und Anbindesystemen, sowie einer Melkeinrichtung. Die Tiere haben dabei freien Zugang, um gleichzeitig zu fressen und gemolken zu werden. Eine automatisierte Melkeinrichtung wird zum Melken auf erhöhten Schienen von oben an die Tiere herangefahren, die gesamte Einrichtung zurFreilandhaltung ist jedoch nicht als Ganzes verfahrbar. Weiterhin ist ein Aufenthaltsbereich für Milchvieh und eine Bewirtschaftungseinrichtung vorgesehen. Ein Bewirtschaftungsroboter kann dazu verwendet werden, den Boden zu trocknen oder sonst wie zu behandeln, etwa zur Reinigung, zur Bodenabtragung, zum Kompostieren oder zur Sauerstoffeinbringung. Tiere und Geräte werden von Kameras überwacht.

Die DE 20 2013 007 369 U1 beschreibt eine mobile Weidehütte auf einem Anhänger mit ausklappbaren Seitenwänden, einem Dach und Schwingtoren. Auf die Weise wird mit geringem Aufwand ein Unterstand für mehrere Tiere erreicht, wobei die Auf- und Abbauarbeiten gering und schnell durchführbar sind, da alle benötigten Bauteile fest am Anhänger angebracht sind. Einen eigenen Boden hat die Weidehütte nicht. Soll die Weidehüte versetzt werden, werden nach dem Anheben des Stalls Reifenräder mit Steckachsen am Rahmen montiert. Die Weidehütte kann auch als Treibwagen genutzt werden, während des Versetzens läuft das Vieh dann im geschlossenen Anhänger hinter dem Traktor, der den Anhänger zieht, mit. Die Weidehütte kann auch mit einem Boden versehen werden und dadurch als Viehtransporter Verwendung finden. Sie ist jedoch nicht mit Maschinen oder Fahrzeugen befahrbar.

Die US 2019/0110430 A1 beschreibt einen mobilen Schutz für eine Tierheimeinrichtung für Geflügel und Kaninchen, bei der der Boden frei ist und ein Rahmen mit einer Bedachung und Fütterungseinrichtungen mit einem Fahrwerk aus Transporträdern in programmierbarer, fernbedienbarer oder GPS-gesteuerter Weise in mehreren Richtungen bewegt werden kann. Eine flexible, umlaufende Schürze im unteren Teil des Seitenrahmens kann dabei Unebenheiten des Untergrundes ausgleichen. Die oberen Teile der Seitenwände sind nach oben ausklappbar und dienen auch als Sonnenschutz, die Öffnungen sind durch Drahtgitter gesichert. Es ist einerseits nicht vorgesehen, dass die Tiere die Vorrichtung verlassen können, andererseits wird nicht verhindert, dass Tiere sich hinausgraben oder Raubtiere hineingraben können.

Die EP 2 702 866 B1 beschreibt einen Mobilstall zur Unterbringung von Geflügel, Kälbern oder Schweinen, der auf Kufen auf einer Freifläche bewegt werden kann und der einen Grundrahmen, darauf stehende Wände und ein Dach besitzt. Einen Boden besitzt der Mobilstall nicht, kann aber einen Rost aufweisen, damit die Tiere nicht mit dem Kot in Berührung kommen. Der Mobilstall muss mit einer Zugmaschine versetzt werden, sobald der Boden mit der maximal verträglichen Menge an Kot verschmutzt ist. Die Tiere können den Stall nach Belieben betreten und verlassen. Der Mobilstall ist nicht mit Maschinen oder Fahrzeugen befahrbar.

Die DE 20 2005 005 236 U1 beschreibt eine mobile Weidehütte bestehend aus modulartigen Seitenwänden und einem Dach, die durch einen Rahmen verbunden sind. Wenn die Weidehütte von einem Ort zum anderen bewegt werden soll, werden die Seitenwandmodule und das Dach einzeln abgenommen und der Transport der Module und des Rahmens erfolgt im demontierten Zustand. Am Zielort wird die mobile Weidehütte wieder zusammengesetzt, einen Boden besitzt die Weidehütte nicht.

Die DE 83 05 464 U1 beschreibt einen fahrbaren Tierstall für den vorübergehenden Aufenthalt von Tieren wie Pferden oder Wildtieren wie auch zur Lagerung von Futtermitteln, Reitzeug und dergleichen, wobei der fahrbare Stall jederzeit durch Ankopplung an ein Zugfahrzeug abtransportiert werden kann.

Auch für die betreffenden Flächen innerhalb der mobilen Einrichtung besteht einschlägiger Stand der Technik hinsichtlich Modulbauweise, beispielsweise aus der Technologie zu Tiertransporten. So beschreibt die EP 654 396 B1 Bodenelemente, die selbst bei Verunreinigungen Paarhufern trittsicheren Halt geben. Diese Bodenelemente haben H-förmige Ausprägungen als Profilierung, sind austauschbar und ggf. gut zu reinigen.

Die EP 3 248 458 A1 beschreibt einen mobilen Stall für Schweine mit einer Grundfläche, einem Aufbauboden, Seitenwänden sowie einem Dach, wodurch ein großer Bewegungsraum mit einer zusammenhängenden Liegemöglichkeit bereitgestellt wird. Ferner sind ein kombinierter Ein- und Ausgang, eine feste Mittelkonstruktion als Rahmen, ein Fahrgestellt mit Fahrwerk, eine Vorrichtung zum Versetzen sowie eine Bremsanlage vorgesehen. Nicht offenbart ist hingegen ein Funktionsboden, dessen Tragwerk als Rahmen ausgebildet ist oder mit dem Rahmen verbunden ist und dabei lasttragende Funktionen übernimmt. Ebenso wenig sind sach- und artgerechte ausgestaltete Funktionsbereiche mit unterschiedlich ausgebildeten Flächen vorgesehen. Darüber hinaus werden keine für Maschinen oder Fahrzeuge befahrbaren Flächen offenbart. Ferner ist keine Ausgestaltung beschrieben, bei der Bereiche des Bodens mittels steckbarer und/oder mobiler Trenneinrichtungen variabel als unterschiedliche Funktionsbereiche anpassbar oder gestaltbar sind.

Die beschriebenen Systeme sind entweder klein oder nur für die Haltung von Kleintieren geeignet oder sie sind aufwändig und sehr schwer, was ihre Mobilität erheblich einschränkt. Bei der Mobilität muss vor allem das große Gewicht berücksichtigt werden, während kleine Mobilställe meist unter einem Gewicht von wenigen Tonnen einschließlich der darin befindlichen Tiere wiegen, können größere Einheiten für Großvieh wegen der erforderlichen Stabilität auch wesentlich größere Gewichte aufbringen. Dies gilt umso mehr, wenn solche mobilen Einrichtungen für Maschinen und Fahrzeuge befahrbar sein sollen. Beim Verfahren mit schweren Arbeitsmaschinen wirken dabei sehr hohe Kräfte auf den Boden, was ihn einerseits beschädigen könnte, andererseits aber auch die Fortbewegung als Ganzes deutlich erschwert. Die Aufgabe der Erfindung ist daher, das beschriebene Dilemma aufzulösen und eine Lösung bereitzustellen, die die Vorteile von intensiver und extensiver Haltung aufweist und die jeweiligen Nachteile vermeidet, dabei aber gleichzeitig wirtschaftlich und ökologisch ist. Die Erfindung löst die Aufgabe durch eine mobile Einrichtung für Großvieh, aufweisend
- mindestens eine Grundfläche mit einem Boden,
- mindestens vier stabile seitliche Begrenzungen, wie beispielsweise Seitenwände,
- ein Dach, welches mindestens den Großteil der Grundfläche überdacht,
- einen Rahmen,
- mindestens ein Fahrgestell mit mindestens einem Fahrwerk, welches an dem Rahmen befestigt ist,
- mindestens eine Vorrichtung zum Versetzen im Zug- und/ oder Schubbetrieb oder durch Eigenantrieb oder als Teilantrieb oder als Zusatzantrieb,
- ein Bremsanlage, wobei
- die Grundfläche durch einen Funktionsboden gebildet wird,
- wobei der Funktionsboden mit dem Rahmen verbunden oder ein Tragwerk des Funktionsbodens als Rahmen ausgebildet ist,
- der Funktionsboden mit festen und/oder arretierbaren und mobilen Trenneinrichtungen in Funktionsbereiche einteilbar oder aufgeteilt ist, und dafür - im Funktionsboden eine Vielzahl von Aufnahmen für Einsteckmodule vorgesehen ist,
- auf dem Funktionsboden mindestens eine Lauffläche für Tiere und Personal angeordnet ist, die auch von Maschinen und Fahrzeugen befahrbar ist,
- auf dem Funktionsboden mindestens eine Ruhefläche für Tiere eingerichtet ist,
- mehrere variierbare Eingänge und Ausgänge mit Eignung für den eigenständigen Zutritt auf den Funktionsboden für die Tiere eingerichtet sind,
- mindestens eine Einfahrt für Fahrzeuge und mindestens ein Zugang für Personal auf den Funktionsboden vorgesehen ist.

Die Einteilung der Funktionsbereiche für die Tiere erfolgt dabei sach- und artgerecht für die jeweiligen Tiere und ist bei wechselnden Tierarten entsprechend anpassbar. Unter einer Vielzahl wird bezüglich der Aufnahmen für Einsteckmodule eine Zahl zwischen Zwei und Tausend verstanden, um einen variablen und modularen Aufbau zu ermöglichen. Die mindestens eine Einfahrt für Fahrzeuge und der mindestens ein Zugang für Personal auf den Funktionsboden kann dabei auch kombiniert von den Tieren genutztwerden. Der Funktionsboden liegt dabei nicht direkt auf der Erde auf, was den Flurboden, vor allem aber die Gras- narbe schützt. Nur einzelne Elemente liegen zeitlich begrenzt auf dem Flurboden oder der Grasnarbe auf. Der Funktionsboden ist formstabil und wird von mindestens einem Fahrwerk und/oder den Stützelementen getragen. Er kann aus einem oberen Funktionsboden und einem unteren Funktionsboden zusammengesetzt sein.

Auf dem Funktionsboden werden die Funktionsbereiche gebildet, dies sind tierspezifische Liege-, Ruhezonen, Lauf-, Bewegungsflächen, Press-, Tränkenbereiche, Pflege-, Gemeinschaftszonen, Kranken-, Geburts- und Nachwuchsbereiche, Melk-, Scherbereich und weitere, angepasst an bestmögliches Wohlbefinden, Gesundheit, natürlich veranlagtem Verhalten, Bedürfnisse und dafür Distanz- und Ausweichmöglichkeiten für Hierarchiestrukturen der Tiere und deren Nutzaufgabe, sie sind sach- und artgerecht für Einzel-, Gruppen-, und Herdenhaltung aufgebaut, ausgestaltet und ausgestattet. Durch die modulare Bau- weise kann bei Änderung des Besatzes durch Umstecken der Trenneinrichtungen unterschiedlichen Bedürfnissen entsprochen werden. Es bestehen auf diese Weise auch ausreichend Separationsmöglichkeit für die Tiere im Falle von Krankheit, Geburten, im Behandlungs- und Nachwuchsbereich, als Einzel- und Gruppenbuchten oder Boxen mit festen Seitenwänden. Durch die variablen Abtrennungen in Form von Steckwänden oder sonstigen Inneneinrichtungen kann flexibel vorgegangen werden.

Ausgestaltungen betreffen die Steckwände. Diese weisen Passungen und lösbare Arretierungen auf, mit denen sie mit dem Funktionsboden fest, aber lösbar verbunden sind. Die Steckwände können dabei aus Gittern, Gattern oder durchgehenden Wänden mit Sichtschutz oder Stangen, Zaunelementen, Brettern oder weiteren Elementen bestehen, ihre Höhe kann unterschiedlich sein, an ihnen können Einrichtungen für die Funktionsbereiche befestigt sein. Gleiches gilt für die sonstigen Trenneinrichtungen, die vergleich- bar aufgebaut sind. Dafür sind verschiedene Klapp-, Falt-, Schiebe-, Schwenk-, Teleskopsysteme und weitere auch aus Hohlprofilen vorgesehen.

Weitere Ausgestaltungen betreffen den Funktionsboden. Für bestimmte Funktionsbereiche kann dieser auf seiner Oberseite aus Steckelementen eines Oberbodens gebildet sein, die ebenfalls in die Steckaufnahmen des Funktionsbodens passen und damit lösbar verbunden werden. Durch gelegentliches Entnehmen können die Steckelemente des Oberbodens gereinigt und desinfiziert werden, falls dies aus hygienischen

Gründen, beispielsweise nach einem Krankheitsausbruch, oder für Wartung, Reparatur darunter befindlicher Bauteile und Systeme erforderlich sein sollte. Durch die Steckelemente des Oberbodens und die Steckwände werden die Funktionsbereiche anwendungsbezogen gestaltet und räumlich getrennt, wenn es tier- und herdenspezifisch erforderlich ist. In weiteren Ausgestaltungen ist vorgesehen, dass
- mindestens eine Hub-Anhebe-Senkvorrichtung vorgesehen ist, welche kombiniert mit dem Fahr- werk oder separat davon ist, mit der die mobile Einrichtung angehoben oder abgesenkt oder stabilisiert werden kann,
- eine Vielzahl von festen und/oder höhenanpassbaren Stützelementen vorgesehen ist, mit denen Unebenheiten unter der gesamten mobilen Einrichtung höhenmäßig angepasst, stabilisiert und ausgerichtet werden können.

In einer weiteren Ausgestaltung ist das Tragwerk des Funktionsbodens als Fachwerk ausgebildet, wobei das Fachwerk die lasttragende Funktion erfüllt und verwindungssteif ist. Es ist ausgebildet aus flachen, offenen und/oder geschlossenen Profilen. Auch Vollprofile sind möglich. An dem Tragwerk sind die Stützelemente und Steckaufnahmen befestigt.

Auf der Trägerkonstruktion befindet sich somit der fest verbundene sowie gesteckte Oberboden, seine Auslegung und Ausrüstung erfolgen je nach Tierart jeweils artgerecht, rutschsicher gesundheitsfördernd und dem Sozialverhalten der Tiere entsprechend. Dazu gehören auch weitere Einrichtungen wie Melkanlage und -roboter, Einzelboxen, Liege- und Erholungsbereiche, Fütterungseinrichtung, Aktiv-Beschäftigungszonen, Bereich zum Sammeln von Ausscheidungen, Reit-Putz-Pflegebereich und weitere. Für Mischherden kann der Oberboden mit verschiedenen Bereichen für verschiedene Tierarten ausgebildet werden.

Der Funktionsboden nimmt die Ausscheidungen der Tiere auf oder separiert sie, beispielsweise durch Stroh als Tretmist- oder Tiefstreubereich. Er verhindert, dass die Fäkalien den darunter befindlichen Flurboden verunreinigen sowie überdüngen und dass dann die Vegetation auch durch Trittschäden abstirbt. Der Funktionsboden weist deshalb in einer Ausgestaltung wenigstens abschnittsweise einen festen, ausreichend geschlossenen Oberboden und undurchlässigen Unterboden auf.

Zum Entmisten ist der Oberboden entsprechend mit Radlader, Teleskoplader oder Traktor auf definierten Wegen befahrbar. Optional kann zum Entmisten auch ein Rollbandboden, eine Schieberanlage oder Vergleichbares verbaut werden. Wenn es gesundheitlich für die Tiere fördernd ist, kann der Oberboden auch mit Gummi- oder Wassermatten oder dergleichen belegt werden. Auch andere Einstreuarten wie Sägemehl und Pellets sind möglich.

Der grundsätzliche Aufbau des Funktionsbodens und damit verbunden des Rahmens, des Fahrgestells und des Fahrwerks entspricht dabei üblichen Modulbau-Konstruktionsweisen des Fahrzeugbaus, der Fahrzeugtechnik, der Landtechnik, dem Stallbau, der Leichtbauweise, Fachwerks- und Gitterkonstruktionen mit dem Auslegungsunterschied, dass die mobile Einrichtung nur langsam unterwegs ist, wenn sie versetzt wird. Die Auslegung erfolgt daher vorrangig nach statischen und nicht nach dynamischen Gesichts- punkten hinsichtlich der aufzunehmenden Kräfte. Die Bauteile des Funktionsbodens sind dabei korrosionsbeständig und langlebig auszuführen.

Der komplexe Funktionsboden der mobilen Einrichtung bietet den Tieren sämtliche und vollständige Funktionsbereiche zum Ausleben all ihrer natürlichen Bedürfnisse in artgerechter Form, artgerechtem Umfang sowie artgerechter Art und Weise. Gegenüber dem oben beschriebenen Stand der Technik wird Raum und Platz für die natürlichen Verhaltensweisen geboten: Großtiere, wie z.B. Rinder, sind Distanztiere, die einen Abstand zueinander von 0,5 bis 5 Metern benötigen. Sie sind Herden/Gruppentiere mit klaren Hierarchiestrukturen. Platzangebot und Ressourcen müssen ausreichend sein, um Ausweichmöglichkeiten für rangniedere Tiere gegenüber ranghöheren Tieren zu schaffen. Erforderlich sind auch Separationsmöglichkeiten für einzelne Tiere im Falle von Krankheiten oder zum Abkalben in Abkalbebuchten. Für Milchvieh werden im Folgenden der Platzbedarf der mobilen Einrichtung und der Weide beispielhaft zur Dimensionierung dargestellt. In ortsfesten Liegeboxen-Laufställen beträgt der Platzbedarf pro Milchkuh vier bis sechs Quadratmeter. In der extensiven Haltungsform beträgt die Viehdichte ein bis zwei Tiere pro Hektar, in der intensiven Haltungsform werden auch fünf oder mehr Tiere pro Hektar gehalten. Für ein optimiertes Beweidungsmanagement ist aus dem natürlichen Bewuchs der Weide und dem Regenerationsbedarf in der Regel ein Wert dazwischen optimal, vor allem dann, wenn auf zusätzliche Düngung der Beweidungsfläche verzichtet wird. Ein solches optimiertes Beweidungsmanagement führt auch dazu, dass der Boden große Mengen an C02 als Huminsäuren einspeichert, pro Jahr und Hektar sind dies ca. 0,5 Tonnen, die der Atmosphäre entnommen werden.

Der Funktionsboden hat auch die Aufgabe, die Ausscheidungen der Tiere zu sammeln. Insbesondere beim Tränken, Ruhen, Bewegen und bei der Aufnahme von Futter bleiben die Ausscheidungen auf dem Funktionsboden und werden nicht, wie sonst beim Weidegang, direkt dem Flurboden zugeführt. Dadurch verringert sich die Nährstoffbilanz der Weide an sich, so dass eine höhere Viehdichte möglich ist. Voraussetzung dafür ist, dass die gesammelten Fäkalien entweder kompostiert werden oder auf einer anderen Fläche bzw. einem anderen Flurstück ausgebracht werden als auf der Fläche, auf der sich die Tiere befinden. Daher ist eine höhere Viehdichte auch unter ökologischen Aspekten möglich, bei 2 bis 3 Großtieren pro Hektar auf einer Weidefläche von 13 bis 19,5 Hektar ergibt sich ein Viehbestand von 39 Großtieren, beispielsweise Milchkühen. Dabei ist es auch möglich, zwischen zwei oder mehr zusammenliegenden Weiden zu wechseln.

Für die Größe eines Funktionsbodens ergibt sich daraus eine Gesamtfläche von 160 bis 240 Quadratmetern. Für zusätzliche Einrichtungen wie Fahrgestell und Melkeinrichtung werden weitere 60 Quadratmeter benötigt. Eine solche fahrbare Einrichtung kann also beispielsweise mit Außenmaßen von 15 x 15 Metern bis 15 x 20 Metern gebaut werden. Das Gewicht der Bewohner beträgt dabei etwa 26 Tonnen, die Konstruktion ist etwa gleichschwer und entspricht den Anforderungen des Untergrunds, etwa aufgrund von Gefälle, Witterung etc.

Anstelle eines großen Funktionsbodens für eine große mobile Einrichtung kann auch eine Vielzahl kleinerer Einheiten miteinander gekoppelt werden, je nach den örtlichen Gegebenheiten bezüglich des regelmäßigen Versetzens.

Während verfahrbare Ställe für die Kleintierhaltung, etwa für Geflügel und Kaninchen, längst Stand der Technik sind, scheiterten mobile Ställe für Großtiere bislang an Gewicht und Ausmaß der Konstruktionen, die aufgrund der Massen und der Kräfte der Großtiere sehr massiv und verwindungssteif ausgelegt werden müssen. Diese Steifigkeit bei gleichzeitigem Leichtbau wird durch den Funktionsboden hergestellt.

Beispielhaft kann vorgesehen werden, dass Tragrahmen und Unterboden aus dünnwandigen, geschlossenen Hohlprofilen aufgebaut sind, die in mindestens zwei Schichten kreuzweise übereinandergeschichtet sind. Sie sind vorzugsweise mit elastischen Formteilen miteinander verbunden. Diese verringern die Steifigkeit nicht, dämpfen aber Schwingungen, auf diese Weise entsteht ein für die Tiere gelenkschonender Schwingboden. Konstruiert man die beiden Schichten aus quadratischen Rechteckprofilen aus verzinkten Stahlrohren und lässt dabei jede zweite Reihe frei, ergibt sich bei Rohren mit 100 mal 100 Millimetern Kantenlänge und 3 Millimetern Wandstärke ein Gewicht von ca. 18 Tonnen für 220 Quadratmeter oder bei einer Kantenlänge von 80 Millimetern und 2 Millimetern Wandstärke ein Gewicht von ca. 12 Tonnen. Selbstverständlich können auch andere Hohlprofile und andere Materialien verwendet werden, auch können die Abstände der Hohlrohre voneinander größer oder kleiner gewählt sein. Auch Doppel-T-Träger und/oder Gitterkonstruktionen können anstelle der Hohlprofile Verwendung finden.

Zwischen den Stäben, Profilen oder innerhalb der Hohlprofile verlaufen beispielsweise die Ver- und Entsorgungsleitungen, sie können gegebenenfalls mit Molchtechnik gut gereinigt werden. Über den Schichten der Profile ist der Oberboden ausgelegt und fixiert, beispielsweise aus Sperrholz oder Stahlbeton, der dort verstärkt ist, wo Fahrzeuge wie beispielsweise Mistschieber fahren sollen. Dort, wo die Tiere bevorzugt urinieren, können Spaltenböden oder Rinnen mit Abläufen und Abdeckrosten vorgesehen werden, wobei diese mit den Entsorgungsleitungen und Sammelvorrichtungen verbunden sind, so dass die Flächen unterhalb des Funktionsbodens unbelastet bleiben. Auch wird auf diese Weise verhindert, dass über- mäßig ammoniakhaltige Aerosole entstehen.

Weitere Ausgestaltungen betreffen die Fahrwerke, denen aufgrund der großen Gewichte besondere Aufmerksamkeit zukommt. Hierbei kann je nach Größe der mobilen Einrichtung und den örtlichen Aufstellungsgegebenheiten zwischen drei grundsätzlichen Alternativen ausgewählt werden, wobei jeweils zwei auch miteinander kombiniert werden können, ferner können die Fahrwerke auch geteilt ausgeführt sein. Gemeinsam ist ihnen, dass eine Höhenverstellung und Höhenanpassung vorgesehen sind, damit Unebenheiten des Geländes ausgeglichen werden können. Mindestens ein Fahrwerk ist nötig.

Das Fahrwerk ist mit dem Fahrgestell, dem Rahmen und/oder Tragwerk des Funktionsbodens mit einem Raupenlaufwerk, einem Reifenräderlaufwerk oder einem Schienenlaufwerk verbunden. Dieses mindestens eine Fahrwerk ist zwischen Rahmen/Fahrgestell und Funktionsboden oder unter dem Oberboden oder außerhalb der Fläche des Funktionsbodens angeordnet. Am Rahmen ist dabei mindestens eine zum Verfahren geeignete Anhängervorrichtung für Fahrzeuge oder mindestens ein Zusatzantrieb oder Teilantrieb zum Unterstützen einer Zugmaschine oder mindestens eine zum Versetzen durch Seilwinden oder Hydraulik geeignete Vorrichtung oder mindestens ein zum eigenständigen Antrieb geeigneter Antrieb vorgesehen. Auch ein Kufensystem ist möglich.

Zum Versetzen einer mobilen Einrichtung ist an mindestens einer der Seiten eine Vorrichtung zum Lenken vorgesehen, das können eine Deichsel mit einer Zugvorrichtung oder Zugseile sein. Mit einer externen Zugmaschine oder einer Seilwinde kann die mobile Einrichtung dann ohne Demontage langsam versetzt werden. Größere mobile Einrichtungen sind mit mindestens einer Nachlauflenkung und/oder Zwangslenkung an den Laufwerken ausgestattet.

Die Raupen entsprechen dabei denen, die bei Raupenbaggern oder Mähdreschern Verwendung finden, die Räder entsprechen denen für schwere Straßenfahrzeuge oder von LOF-Fahrzeugen, wobei LOF für Land- oder Forstwirtschaftliche Zulassung steht, je nach Anforderungen an die Lenkbarkeit können diese an Nachlaufachsen angebracht sein. Die Schienen entsprechen denen von Straßenbahnen. Für die mobile Einrichtung sind dann jeweils mindestens zwei, besser aber vier oder mehr solcher Raupen oder Räder erforderlich. Sie können auch doppelt und/oder als Tandem verbaut werden. Die Raupen oder Räder fahren bevorzugt auf trockenem Weidegrund oder befestigten Fahrstreifen oder -wegen.

Die Bodenverdichtung auf Weiden ohne festen Untergrund ist abhängig von Radlast, Aufstandsfläche und Druck. Hierdurch ergibt sich die erforderliche Anzahl der Räder oder der Raupen. Auch ist es möglich, den Untergrund durch Bodenschutz-/Fahrplatten zu befestigen. Bei Verwendung fest mit dem Boden verbundener Schienen können auch höhere Achslasten gewählt werden.

Die mobile Einrichtung wird integriert auf einer ausreichend dimensionierten Weidefläche, wobei die Weide als natürlicher Lebensraum dient. Die Weide darf dabei mit Bäumen, Hecken, Wasserläufen, Gräben, Felsen etc. durchzogen sein, wobei Inhomogenität vorzuziehen ist, damit die Tiere die natürliche Umgebung intuitiv nutzen können, etwa indem sie im Gras liegen oder Schutzsuchen. Zwischen den Nutztieren, Pflanzen und Insekten soll sich das natürliche ökologische System einstellen können. Umsetzbar ist auch eine Weidehaltung, die zwischen verschiedenen Abschnitten des Weidegebiets wechselt, damit sich der Bewuchs zwischen den Beweidungen regenerieren kann. Da auf diese Weise ein Wurzelbildungsreiz ausgeübt wird, der zu erhöhter Humusbildung aus Kohlendioxid führt, lässt sich auf diese Weise eine halbe Tonne Kohlendioxid pro Jahr und Hektar als Humusspeicher aus der Atmosphäre einbinden.

Die mobile Einrichtung vervollständigt das ökologische System, wenn die natürliche Umgebung witterungsbedingt oder vegetationsbedingt an seine Grenzen gerät. Die vorgeschlagene mobile Einrichtung kann von den Nutztieren selbstständig und instinktiv, aus eigener Initiative heraus genutzt werden. Aus diesem Grund werden in der Einrichtung freier Bewegungsraum, artgerechte Liege- und Erholungszonen, Wetterschutz, Tränken, Fressbereich und Schutz vor Raubtieren sowie vieles mehr angeboten. Die Nutztiere können die Einrichtung beliebig betreten und verlassen. Ein Erkennungssystem für Wölfe oder andere Raubtiere kann eingerichtet oder in ein Tiermonitoringsystem integriert werden.

Die mobile Einrichtung wird regelmäßig versetzt, um Flurschäden und eine lokale Überlastung des Bodens und der Grasnarbe zu vermeiden. Dieses Versetzen kann entweder kontinuierlich oder diskontinuierlich erfolgen, bevorzugt erfolgt es diskontinuierlich. Es kann ggf. durch GPS oder vergleichbare Systeme überwacht und gesteuert werden.

Das kontinuierliche Versetzen erfolgt spurgeführt, vorzugsweise auf Schienen, die auf der Weide eingelassen sind. Der Transport großer Gewichte über Schienen ist bekannter Stand der Technik und man kann sich bei der Konstruktion bewährter Konzepte von Schienenfahrzeugen bedienen. Die Geschwindigkeit ist sehr langsam und beträgt im Normalfall zwischen 5 und 50 Zentimeter pro Stunde. Im Idealfall beträgt sie eine Stallbreite pro drei Tage. Aus diesem Grund ist trotz der großen zu bewegenden Massen keine große Antriebsleistung erforderlich, sondern lediglich ein Übersetzungsgetriebe mit einer erheblichen Übersetzung. Der Antrieb erfolgt vorzugsweise elektrisch und kann solarbetrieben erfolgen, also beispielsweise auch nachts unterbrochen werden.

Da die Bewegung sehr langsam und gleichmäßig erfolgt, können die Nutztiere in der Einrichtung bleiben oder während der Bewegung ein- und ausgehen. Es muss lediglich durch Sensoren sichergestellt sein, dass die Schienen in Bewegungsrichtung frei sind. Anstelle von Schienen können auch befestigte Wege genutzt werden, in diesem Fall erfolgt der Antrieb über ein Raupenlaufwerk oder über Räder. Nachteilig ist dabei, dass hierbei ein höherer Fahrwiderstand zu überwinden ist, was den Vorteil aufwiegt, keine Schienen verlegen zu müssen. Raupenantrieb und Räder befinden sich zwischen dem Tragwerk des Rah- mens und zwischen oder unter dem Oberboden, es ist auch möglich, sie seitlich der Grundfläche vorzuzusehen.

Das diskontinuierliche Versetzen erfolgt nach Möglichkeit ebenfalls spurgeführt, es ist jedoch problematisch, die Einrichtung allein mittels einer Zugmaschine zu bewegen, da diese den Boden auf der Weide beschädigen könnte, wenn nicht ein befestigter Weg vorhanden ist. Stattdessen ist es sinnvoll, die Einrichtung mit zusätzlichem Rad- oder Raupenantrieb zu versehen, wodurch die Zugmaschine unterstützt wird oder mittels eines Zugseils aus der Distanz zu ziehen, bis sie den Zielort erreicht hat. Ein Teil der Nutztiere muss in dieser Zeit die Einrichtung verlassen und es muss darauf geachtet werden, dass sie den Vorgang nicht stören. Die Zugkräfte und die erforderliche Energie können dabei durch eine Seilwinde, Motoren oder Pumpen aufgebracht werden, die an der Zapfwelle oder von der Hydraulik eines Traktors betrieben wird.

Sofern die Einrichtung nicht über ebenes, gerades Gelände geführt werden kann, ist die Einrichtung mit einer Lenkvorrichtung nach Art einer Deichsel ausgestattet, an der das Zugseil oder die Zugmaschine an- setzt. Mit einem Traktor kann die Einrichtung dann gewendet oder neu ausgerichtet werden. Größere mobile Einrichtungen sind mit mindestens einer Nachlauflenkung und/oder Zwangslenkung an den Laufwerken ausgestattet.

In einer Ausgestaltung ist vorgesehen, dass das Fahrwerk ebenso wie die gesamte mobile Einrichtung höhenverstellbar ist. Dadurch ist es möglich, die mobile Einrichtung abzusenken, und auf Stützelementen zur Stabilisierung zu lagern, wenn der darunterliegende Boden dadurch nicht beeinträchtigt wird, und anzuheben, wenn Unebenheiten des Geländes ausgeglichen werden sollen. Die Höhenverstelleinrichtung kann beispielsweise mechanisch als Seilzug hydraulisch mittels Zylinder erfolgen oder durch einen Spindelantrieb elektrisch durchgeführt werden. Als Stützelemente können auch pneumatische Bälge vorgesehen werden. Die Stützelemente werden bevorzugt im Bereich der Kreuzungsstellen des Tragwerks des Funktionsbodens angeordnet.

Sofern das Versetzen einschließlich des Anhebens und Absenkens diskontinuierlich im Rahmen des selbstfahrenden Vorschubs erfolgt, kann es mit der Vortriebsmaschine gekoppelt werden. Auch hierbei sind trotz des hohen Gewichts nur geringe Leistungen erforderlich, weil jeweils nur wenige Zentimeter pro Minute Anhebung erfolgen muss. Die hierfür erforderliche elektrische Energie kann solar erzeugt werden.

In weiteren Ausgestaltungen ist vorgesehen, dass am Rahmen arretierbare Längs- und Quergelenke als Höhenausgleich vorgesehen sind, denn je nach Gelände und den Entfernungen kann das Versetzen diese erfordern, um beispielsweise Senken oder kleine Erhebungen überwinden zu können. Die Längs- und Quergelenke können dabei als Ein- oder Zweidrehgelenke ausgeführt sein.

Sofern öffentliche Straßen benutzt werden müssen, kann der Rahmen, der Funktionsboden und der Aufbau mittels Gelenken derart faltbar, klappbar, teilbar oder teleskopierbar ausgebildet sein, dass er auf Straßenbreite zusammengefaltet oder modulweise getrennt werden kann, wobei die lösbaren Modulverbindung aus Passprofilen bestehen, die ein- und ausschiebbar sind. Diese Faltbarkeit oder modulweise Teilbarkeit kann auch nützlich sein, wenn zwischen dem Fertigungsort und dem Aufstellungsort größere Distanzen zurückzulegen sind.

In einer weiteren Ausgestaltung ist vorgesehen, dass die mobile Einrichtung modulweise hintereinander oder nebeneinander kombiniert wird, die einzelnen Module also teilbar in der Weise gestaltet werden, dass sie straßentauglich transportiert oder wie Waggons von Zügen hintereinander zusammengestellt wer- den können und über große Freiflächen gezogen werden können.

Weitere Ausgestaltungen betreffen Ausstattungen. Diese betreffen
- Aktiv-, Press-, Spiel-, Pflege- und Beschäftigungszonen,
- Kranken-, Geburts- und Nachwuchsbereich,
- Einzel- sowie Gemeinschaftsbereiche,
- Einstreubereiche für Stroh, Pellets und Sägemehl oder dergleichen,
- eine Fäkalienaufnahme und -Sammelstelle,
- eine Abwassersammelvorrichtung mit Urin- und Dungsammelbehälter bzw. -Tank,
- eine maschinelle oder automatisierte Entmistung der Tretmist- und Einstreubereiche,
- die Wasser- und Futterversorgung, etwa durch Lagerkapazitäten, Vorräte oder durch Leitungen und/oder Schläuche, die separat an Versorgungsleitungen anschließbar sind, bzw. an/ von Versorgungsstellen oder Versorgungswagen,
- eine Melkeinrichtung, Schereinrichtung, Reit- Putz- und Pflege- und Gesundheitseinrichtung,
- ein Solardach für die Stromversorgung betrieblicher Einrichtungen,
- eine Klimatisierung incl. Heizung und Kühlung mit isolierten Boden-, Wand und Dachelementen, wie beispielsweise Paneelen,
- eine zugluftfreie Belüftung,
- einen Abluftfilter für Schadstoffe,
- eine Regenwasserrückhalte- und Sammelanlage zur Bereitstellung von Reinigungswasser,
- eine Fangvorrichtung für Tiere,
- Raum für Büro, Aufenthalt, Käseherstellung, Schlachtung, Fleischverarbeitung,
- Einrichtungen für Reinigung, Wartung, Reparatur und Desinfektion,
- Schutzeinrichtungen gegen Raubtiere,
- Schutz vor Sonnenstrahlung, Wind- und Zugluft, Regen und Schnee,
- Insektenschutz,
- angemessenes Tageslicht und Beleuchtung.

Für Tierarten, die in der Natur auch größere Höhenunterschiede überwinden, wie z.B. Ziegen und bestimmte Rinderrassen, können auch doppelstöckige Bauweisen oder Klettergelegenheiten und Emporen vorgesehen werden.

In einer Ausgestaltung ist oberhalb des Oberbodens mindestens eine Fütterungseinrichtung vorgesehen, vorteilhaft sind mehrere getrennte Fütterungseinrichtungen. Sie sollten dauerhaft für die Tiere von innen zugänglich sein, ggf. auch von außen. Die Befüllung kann maschinell oder automatisiert von innen und außen erfolgen. Sie sind vor Witterungseinfluss sowie vor Raubtieren zu schützen.

In einer weiteren Ausgestaltung ist oberhalb des Oberbodens auch eine Melkeinrichtung vorgesehen. Beide können auch in bekannter Weise so miteinander verbunden werden, dass das Milchvieh während des Melkens fressen kann, sofern die mobile Einrichtung der Milchwirtschaft dient. Ansonsten bedienen sich die Nutztiere bei der Nahrungsaufnahme bevorzugt der Weide.

In weiteren Ausgestaltungen sind auf dem Dach eine Solaranlage vorgesehen, die Strom für Verbraucher elektrischer Energie erzeugt und eine Regenwasserrückhalte- und Sammelanlage, die Reinigungswasser für die mobile Einrichtung bereitstellt.

In einer weiteren Ausgestaltung ist eine Belüftung vorgesehen, deren Abzug eine Abscheidung und Speicherung für Methan vorsieht. Bei ca. 40 Kühen ist mit bis zu 10 Kubikmetern Methan zu rechnen, wenn sich die Kühe ganztägig im Stall aufhalten. Je nach Futter kann die Methanmenge auch geringer ausfallen, vor allem dann, wenn sich die Kühe im Freien aufhalten und nur natürliches und artgerechtes Futter fressen.

In einer Ausgestaltung ist auch eine Melkeinrichtung vorgesehen, die von Milchvieh angesteuert werden kann. Die Melkeinrichtung verfügt über eine Signaleinrichtung, mit der Melkpersonal benachrichtigt wird, damit der Melkvorgang eingeleitet und später beendet werden kann, alternativ kann der Melkvorgang auch von einem automatischen Melkroboter durchgeführt werden.

Nicht nur die Inneneinrichtungen, auch die Seitenwände stellen eine formstabile Begrenzung für die Tiere dar und sie schützen vor Witterungseinflüssen und Raubtieren. Es sind verschiedene offene oder geschlossene Ausführungen vorgesehen wie massive Bauweisen mit Holz-, Betonplatten, Wellblech, Paneele, oberhalb mit Netz oder Plane, auch Außenklimaseitenwände aus Netz oder Plane mit oder ohne Klapp- oder Aufrollfunktion samt formstabiler Begrenzung aus Stahl, Holz, Aluminium oder Kunststoff für die Tiere sind vorgesehen. Beispielsweise finden auch Stangen Verwendung, die steckbar oder aus- schiebbar sind.

Für das Dach können verschiedene Ausführungen wie Sattel-, Sched-, Pult-, Schlepp-, Tankstellendach, überstände vorgesehen sein und es soll möglichst als Gründach, Solardach etc. oder einfach mit Plane zum Auffangen von Regenwasser genutzt werden. Es soll mindestens einen Großteil der Grundfläche überdachen.

Natürlich sind alle Bauteile nach äußerlich und innerlich wirkenden Kräften, Belastungen, Einflüssen etc. festigkeitstechnisch nicht unter- oder überdimensioniert und mit langlebigem Schutzauftrag, z.B. Korrosionsschutz, eine Haltbarkeit über mehrere Jahrzehnte aufweisen, versehen. Verwendbare Materialien und Antriebs- und Übertragungsmittel sind bekannter Technik, etwa Stahl, Holz, Beton, Gummi, Kunststoff, Faserstoffe, mechanisch, hydraulisch, elektrisch, pneumatisch.

Für das Versetzen ist ein nasser und unbefestigter Weideuntergrund/-boden zu befestigen, um Flur/Weideschäden zu vermeiden, etwas mittels Rindenmulchs, Schotter, Steine, Teer, Beton, Schiene. Ohne Befestigung des Untergrunds ist eine adäquate bzw. ausreichend große Aufstandsfläche der Reifen und/oder der Raupenlaufwerke zu berücksichtigen, damit der Boden und die Grasnarbe nicht beschädigt und übermäßig verdichtet werden. Auch entsprechende Bodenschutz-/Fahrplatten können Verwendung finden.

Die Erfindung bietet die folgenden Vorteile:
- Artgerechte und nachhaltige Tierhaltung in natürlicher Umgebung ohne Einschränkungen beim Tier- und Naturschutz wie in den herkömmlichen intensiven oder extensiven Haltungsformen.
- Gesunde und nachhaltige tierische Nahrungsmittel, Produkte, Erzeugnisse.
- Bestmögliche Gesundheit und maximales Wohlbefinden für glückliche Tiere.
- Maximale Förderung des Immunsystems und des Sozialverhaltens der Tiere.
- Vermeidung von Krankheiten, Verletzungen, Infektionen und Einsatz von Medikamenten, Arzneimitteln und tierärztlichen Behandlungen.
- Starke Verringerung des Methanausstoßes aufgrund artgerechter und natürlicher Haltung
- Starke Verringerung des Kohlendioxidausstoßes durch Reduzierung des Futteranbaus samt Ernte durch natürliches Nachwachsen der Weidefläche und Grasen der Tiere. Dabei werden große Mengen an C02 im Weideboden gebunden.
- Renaturierung des Bodens unter Humusbildung und Schonung von Mikroorgansimen, Insekten Vögeln etc.
- Regeneration des Grundwasserspiegels durch erhöhte Wasseraufnahme und Speicherfähigkeit des Bodens und ggf. Regenwasserrückgewinnung und Bewahrung vor Trockenheit durch Verzicht auf bodenverdichtende oder -bearbeitende Bewirtschaftung und Förderung der Humusschichtbildung.
- Solare Eigenenergieerzeugung.
- Bessere Pflanzengesundheit und Bodenfruchtbarkeit.
- Speicherung und Lieferung der Pflanzennährstoffe.
- Erhöhte Bodenstabilität und Erosionsschutz.

Die Erfindung wird anhand von Ausführungsskizzen näher erläutert, wobei die Erfindung aber nicht auf diese Darstellungen beschränkt ist. Die Figuren zeigen:
- Fig. 1: einen Grundriss einer mobilen Einrichtung für Milchvieh,
- Fig. 2: die Vorderansicht
- Fig. 3: die Seitenansicht
- Fig. 4: einen Grundriss einer größeren mobilen Einrichtung für Milchvieh,
- Fig. 5: die Vorderansicht mit detailliertem Funktionsbodenaufbau,
- Fig. 6: einen Grundriss des Tragwerks und Oberbodens des Funktionsbodens
- Fig. 7: die Seitenansicht der mobilen Einrichtung,
- Fig. 8: einen Grundriss einer mobilen Einrichtung für Rinder,

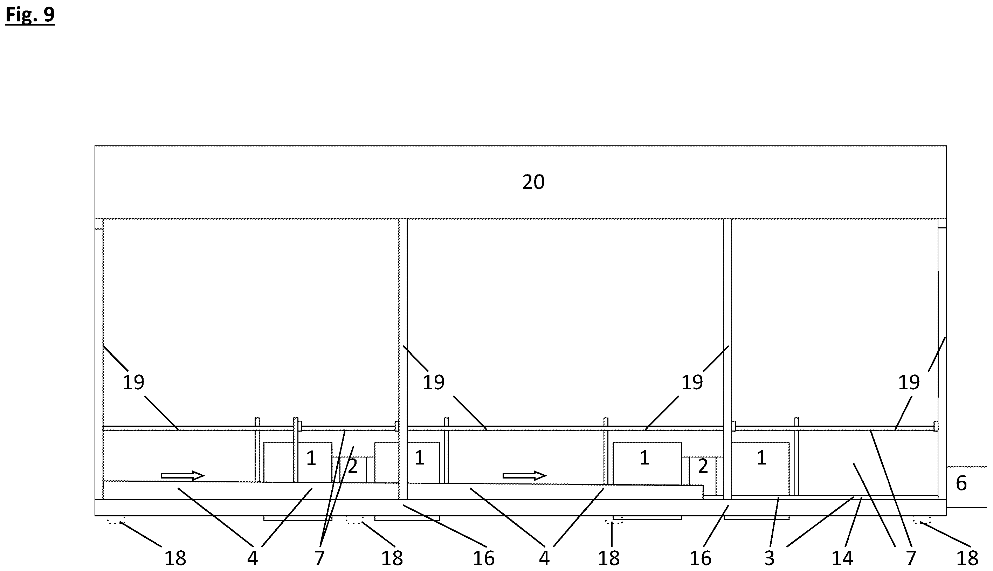

- Fig. 9: die Vorderansicht,
- Fig. 10: einen Grundriss einer mobilen Einrichtung für Pferde,
- Fig. 11: die Vorderansicht,
- Fig. 12: einen Grundriss aus 4 lösbaren Einrichtungsmodulen,
- Fig. 13: eine Vorderansicht aus 4 lösbaren Einrichtungsmodulen,
- Fig. 14: einen Grundriss von größeren Einrichtungskombinationen.

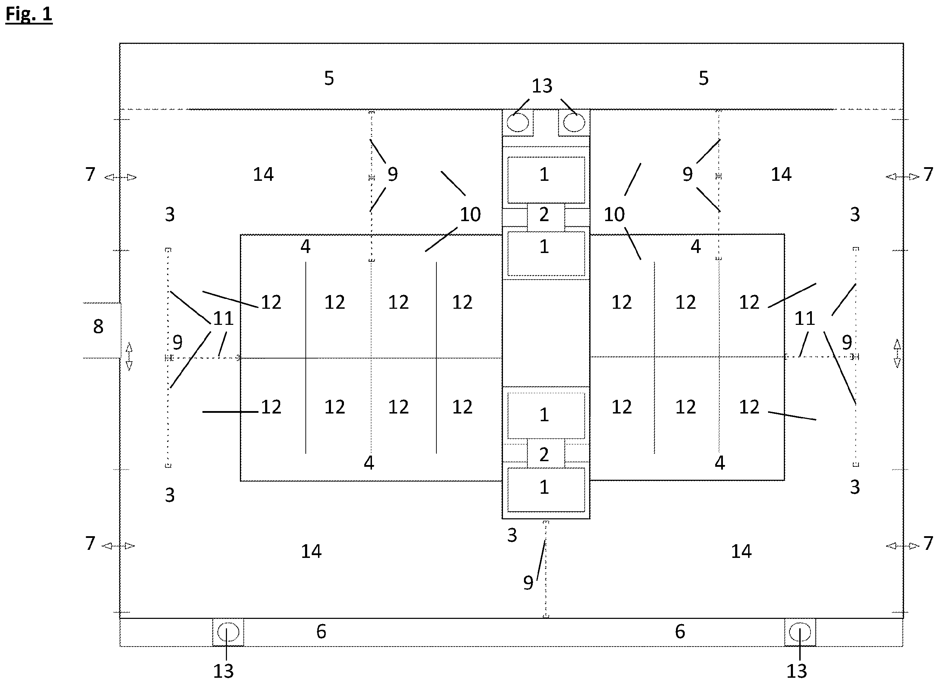

Fig. 1 zeigt einen Grundriss der mobilen Einrichtung für Milchvieh mit vier Laufwerken 1, einem höhen- verstellbaren Fahrwerk 2, Laufflächen 3, Erholungsflächen 4, einer Melkeinrichtung 5, Fütterungsbereich 6, mehreren Ein- und Ausgängen 7 sowie der Anhängevorrichtung 8 für ein Zugfahrzeug. Die Laufflächen 3 sind dabei befahrbar, die Erholungsflächen 4, die auch als Ruhefläche dienen, dagegen nicht. Mit den mobilen Trenneinrichtungen 9 für variierbare Funktionsbereiche werden bei Bedarf die Separationsbereiche 10 abgegrenzt, ebenso mit den Steckbrettern 11. Auf der Erholungsfläche 4 befinden sich auch die Liegeboxen 12, gezeigt werden ferner die Tränken 13.

Während der Zeiten, in denen die mobile Einrichtung steht, sind die Laufwerke 1 entlastet und stehen bedingt zur Stabilisierung auf dem Flurboden auf. Dann können auf den Bodenverstärkungen 14 auch Maschinen und leichte Fahrzeuge zum Einsatz kommen. Wenn die ganze mobile Einrichtung verfahren wer- den soll, senkt das höhenverstellbare Fahrwerk 2 die Laufwerke 1 ab, und die ganze mobile Einrichtung wird leicht angehoben.

Fia. 2 zeigt die Vorderansicht der mobilen Einrichtung aus Sicht der Anhängevorrichtung, wobei die Vorderfront mit den Türöffnungen nicht gezeigt ist. Über das in Fig. 1 bereits Beschriebene hinaus werden die seitlichen Begrenzungen 19 und das Dach 20 gezeigt. Die tragenden Profile sind festmontiert.

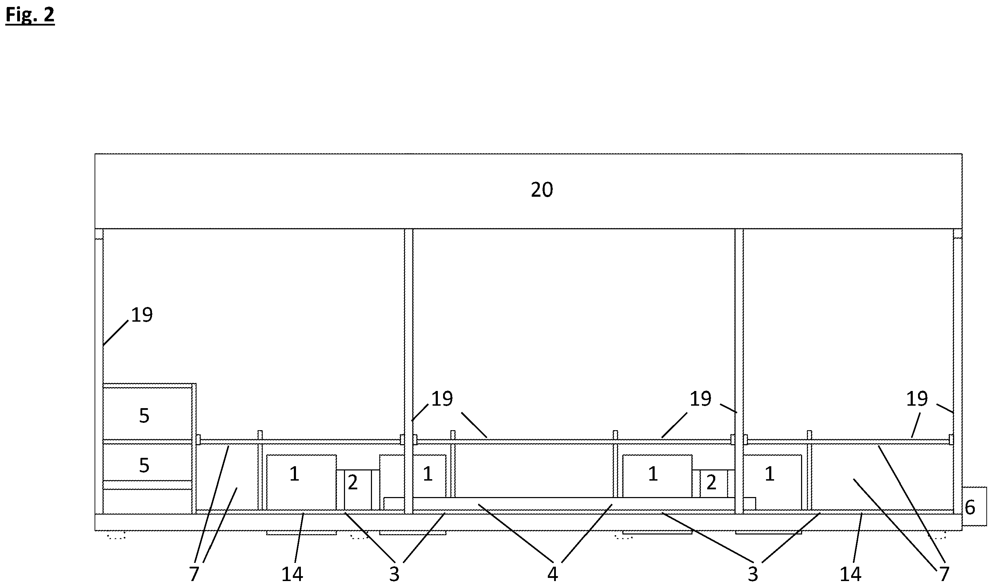

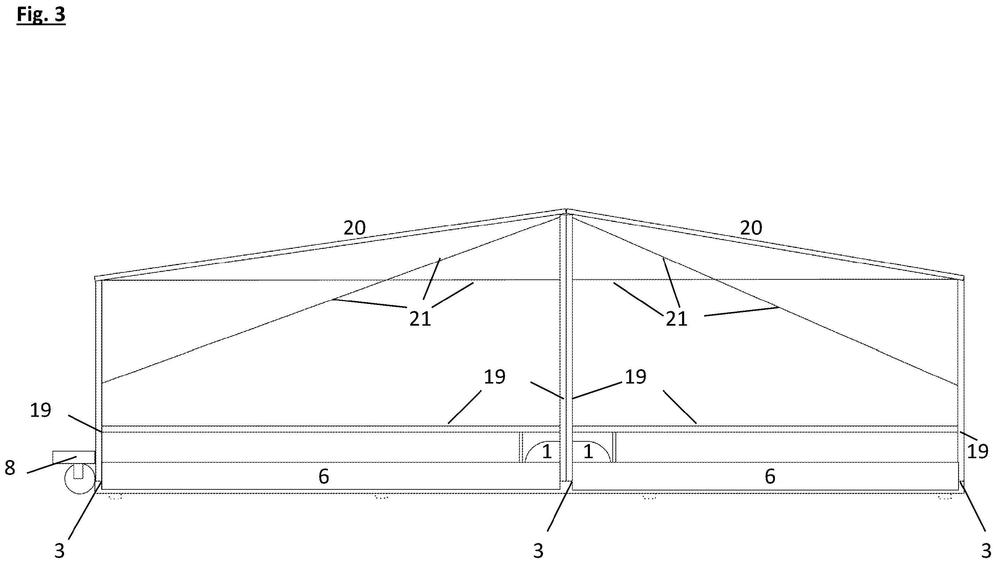

Fig. 3 zeigt die Seitenansicht der mobilen Einrichtung, im Vordergrund ist die breite Fütterungseinrichtung 6 angeordnet. Die Laufwerke sind wie in Fig. 1 entlastet, auch die anderen Gegenstände entsprechen den in Fig. 1 und Fig. 2 beschriebenen Aufbauten. Weiterhin werden die fachwerkartigen Verstärkungsstreben 21 dargestellt.

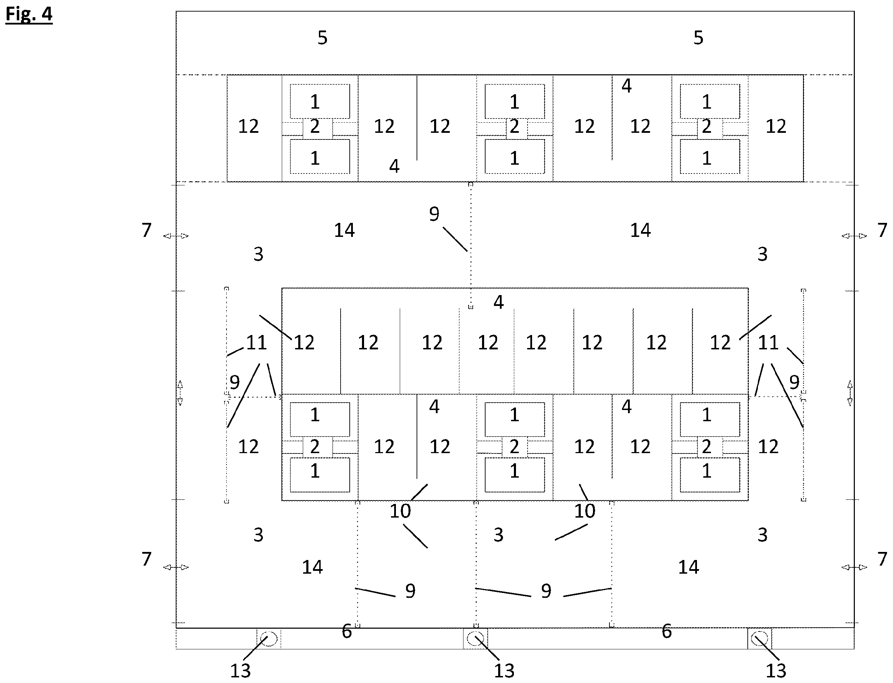

Fig. 4 zeigt einen Grundriss einer größeren mobilen Einrichtung für Milchvieh mit sechs Laufwerken 1, Laufflächen 3, mehreren Ein- und Ausgängen 7. Die Laufflächen 3 sind dabei befahrbar. Die Erholungsflächen 4 sind als Liegeboxen 12 ausgeführt. Insgesamt sind in diesem Ausführungsbeispiel 18 solcher Liegeboxen 12 gezeigt, deren Zahl kann durch Einsetzen der mobilen Trenneinrichtungen für variierbare Funktionsbereiche 9, in diesem Fall Steckwänden, um insgesamt 4 erhöht werden, wenn Bedarf entsteht.

Da Milchkuhherden hierarchisch strukturiert sind, können zur Unterbindung von Streitigkeiten auch weitere Steckwände 9 zur Abtrennung von Bereichen eingesetzt werden. Außerdem können die Steckwände 9 auch zur Abtrennung von Geburtsbuchten benutzt werden. Die übrigen Bezugsziffern entsprechen denen der Fig. 1 bis 3.

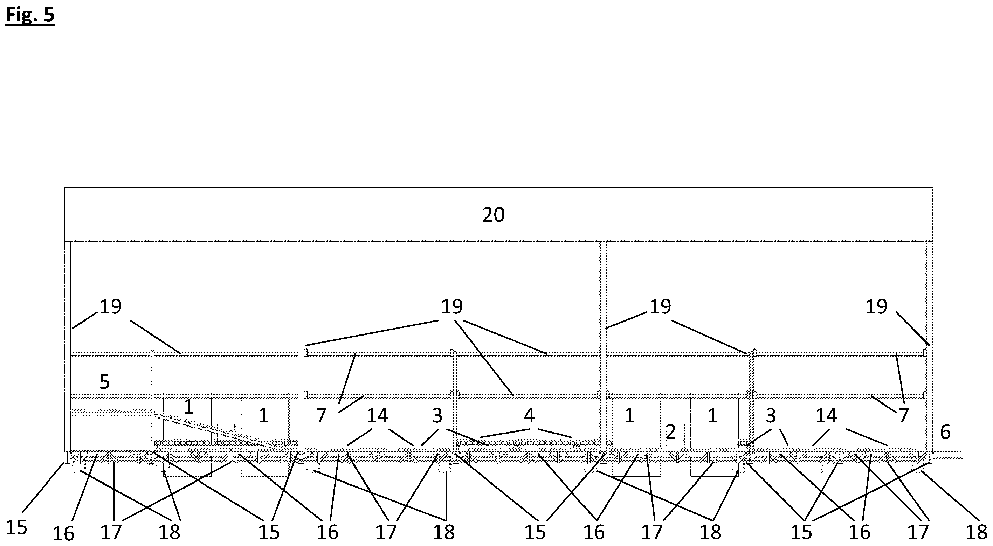

Fig. 5 zeigt die Vorderansicht dazu mit detailliertem Funktionsbodenaufbau und herausgefahrenem Fahrwerk 2, in diesem Fall den Rädern 1. Hierbei sind die Längsträger 15, die Querträger 16 und die Gitterkonstruktion 17 gezeigt. Der Funktionsboden liegt dabei auf den Stützelementen 18 auf, die ihn mit dem Flurboden verbinden. Sofern nur geringe Höhenunterschiede auszugleichen sind, kann durch Variation des Reifendrucks und des Drucks der Auflagen ein Anheben der mobilen Einrichtung vor dem Versetzen erfolgen.

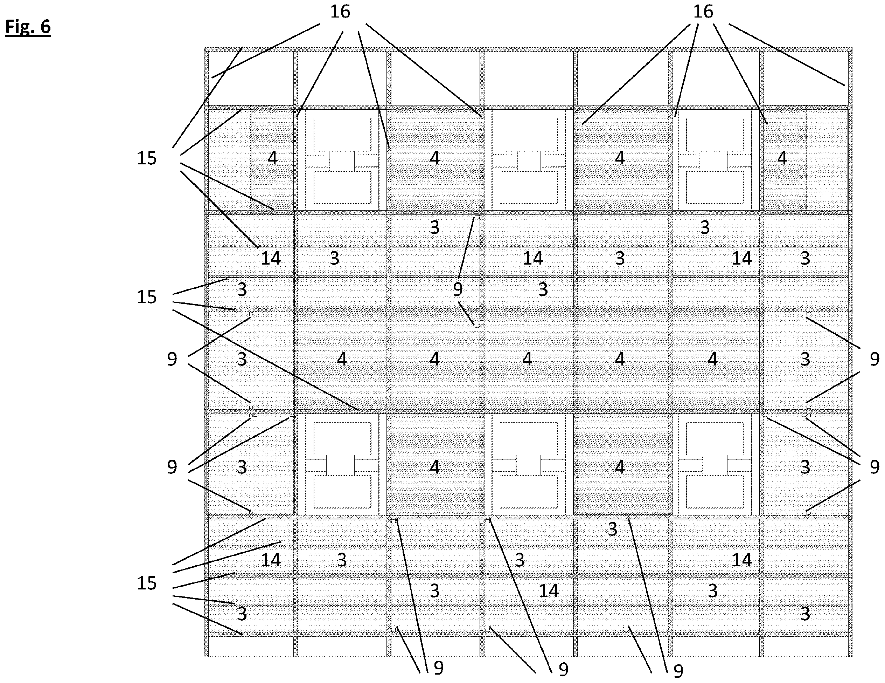

Fig. 6 zeigt die gleiche Variante wie Fig. 4 und stellt die Ausgestaltung und den Aufbau des Funktionsbodens dar. eine weitere Variante für Milchvieh, die sich für eine größere Kuhherde eignet. Hierbei wird beispielhaft eine Belegung des Funktionsbodens mit Einrichtungen für Milchvieh gezeigt. Die Flächen 3, 14 sind mit ihren Auflagen ausgelegt als tragende Auflagen für den Lauf- und Bewegungsbereich und bestehen beispielsweise aus Beton oder Holz. Sie können mit kleinen landwirtschaftlichen Maschinen gut befahren werden. Die Flächen 4 besitzen einen tragenden Unterbau als Liege- und Erholungsbereich aus Metall, Holz oder Beton und sind etwa mit Gummimatten, Wassermatten, Stroh und Sägemehl als Auflage ausgestattet. Sie werden normalerweise nicht befahren. Die Auflagen sind auf den Längsträgern 15 und den Querträgern 16 festmontiert oder mit Steckverbindungen fixiert und dienen gleichzeitig der Verwindungssteifigkeit der Konstruktion beim Transport.

Somit zeigt Fig. 6 einen Grundriss wie zu dem in Fig. 4 gezeigten Grundriss aus der Perspektive von Fig. 5 mit denselben Elementen auf der Höhe des Tragrahmens. Hierbei sind die Längsträger 15 fachwerkartig mit den Querträgern 16 verbunden und bilden das Tragwerk. Im Bereich der Kreuzungspunkte liegt der Funktionsboden auf den Auflagen 18 auf, die formfest montiert oder auch höhenanpassbar sind. Das sind beispielsweise Rollbälge, die an ein Luftdrucksystem angeschlossen sind, auch Hubzylinder sind hier möglich. Die Wahl geeigneter Auflagen hängt von den Geländekonturen und dem Bedarf an Höhenausgleich ab. Bei entsprechend großem Höhenausgleich durch die Stützelemente kann auch auf ein höhenverstellbares Fahrwerk 2 verzichtet werden. In den Bereichen 3, in denen auch Fahrzeuge fahren können, sind die Längsträger 15 in kürzeren Abständen zueinander angeordnet.

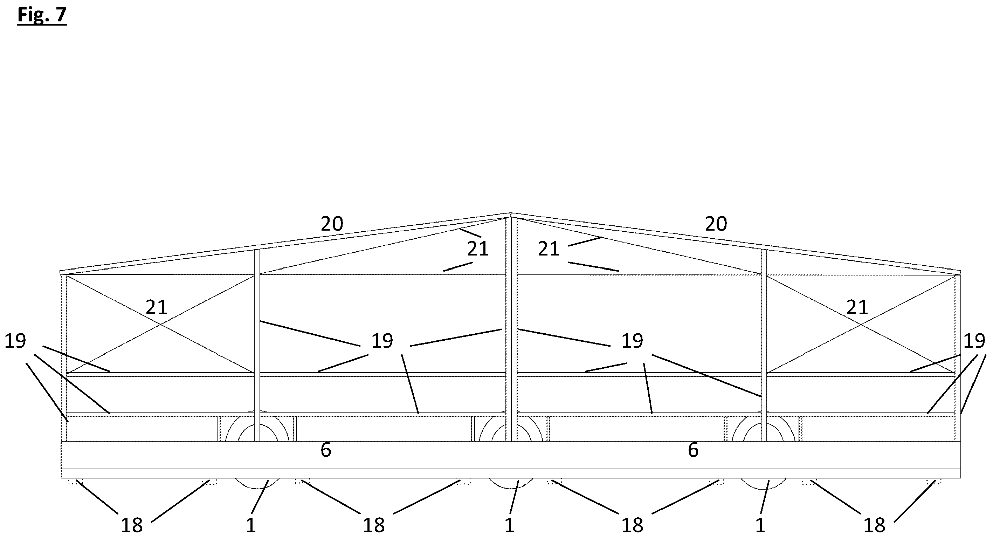

Fig. 7 zeigt die Seitenansicht. Gegenüber der Seitenansicht der kleineren Ausführungsvariante werden mehr Verstrebungen 19 und 21 verwendet, um die Stabilität entsprechend zu verstärken, ohne das Gewicht wesentlich zu erhöhen.

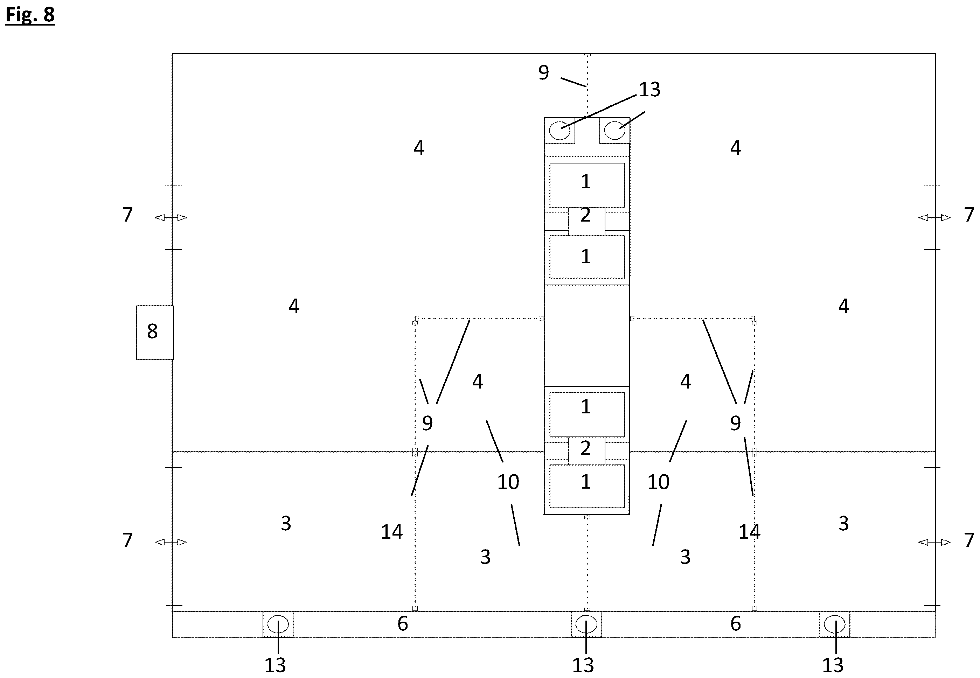

Fig. 8 zeigt eine weitere Variante für Großvieh allgemein. Hierbei sind Trennwände 9 als seitliche Begrenzungen vorgesehen, um einzelne Bereiche 4 für Sonderaufgaben zu reservieren. Im Übrigen können die Tiere den Bereich 4 nach Belieben nutzen, der Bereich 3 kann dabei auch von einfachen Fahrzeugen befahren werden. Es sind ferner Tränken 13 vorgesehen.

Fia. 9 zeigt die Vorderansicht. Hierbei ist zu erkennen, dass die Bewegungsfläche 4 leicht geneigt und nach rechts hin abschüssig gestaltet ist. Das Gefälle beträgt ungefähr 6 Grad. Dadurch laufen Exkremente, angedeutet durch die Pfeile, in die Tretmist- und Entmistungsfläche 3 ab und können mit Räumfahrzeugen oder Schiebern entfernt werden.

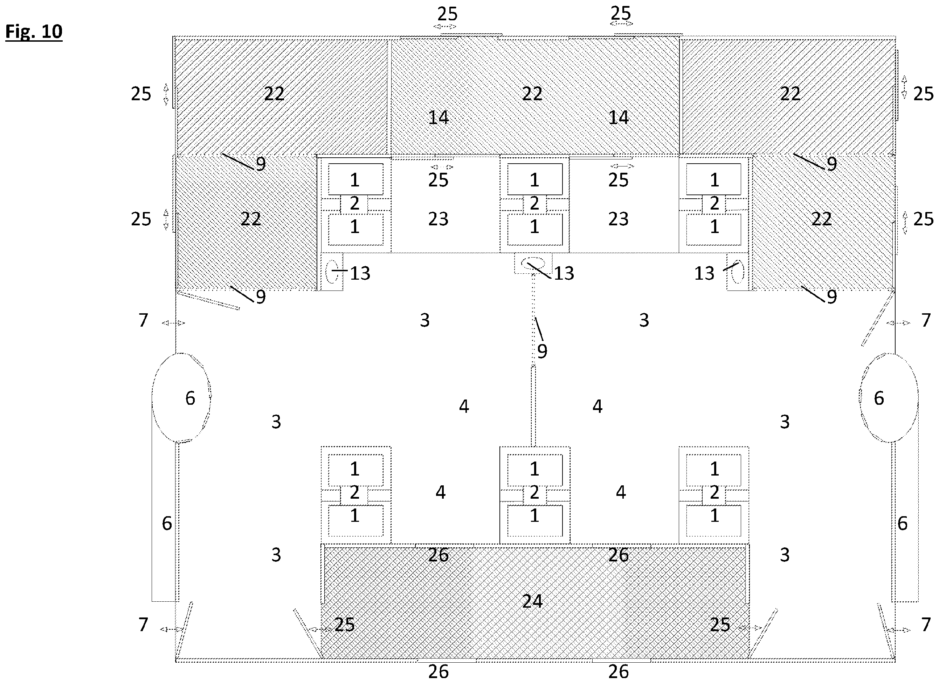

Fig. 10 zeigt die Belegung der Flächen für Pferde im Grundriss. Die Flächen 22 sind mit Boxen belegt, wobei dies bedarfsweise Gemeinschaftsboxen oder Einzelboxen sein können, die Fläche 3 ist eine Bewegungsfläche. Die Fläche 24 dient als Pflegebereich, in dem die Pferde gereinigt werden und Putzarbeiten stattfinden können, sie dient außerdem als Wirtschaftsbereich für beschäftigte Personen, die Fläche 24 ist mit Türen 25 gesichert, die von den Tieren im Gegensatz zu den Ein- und Ausgängen 7 nicht selbstständig geöffnet werden können. Die Zugänge 25 zu den Boxen sind als Schiebetüren ausgeführt und verschließbar. Dargestellt sind auch die Tränken 13.

Die Flächen 23 dienen dem Sammeln von Fäkalien und sind mit Streu ausgelegt. Durch Öffnen der Schiebetüren 25 werden befahrbare Wege geöffnet, um die Sammelstellen zu entmisten. Vorgesehen sind auch Fütterungsbereiche 6.

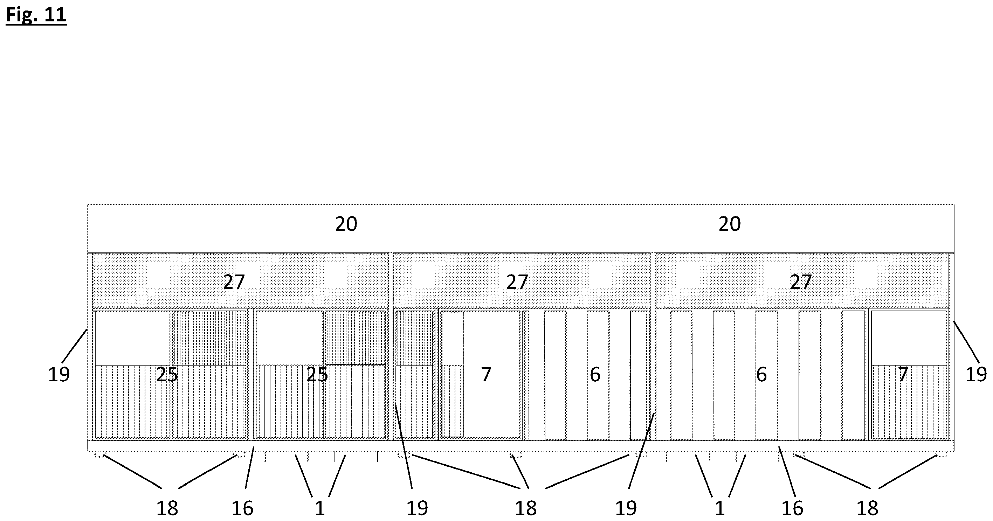

Fig. 11 zeigt die Ausführungsvariante für Pferde in der Vorderansicht. Unter dem Dach 20 sind Windnetze 27 angeordnet, damit kann Frischluft in die mobile Einrichtung einströmen, ohne dass Fliegen ein- fliegen können. Im linken Bereich sind Boxen mit Schiebetüren 25 vorgesehen, in der Mitte ist ein Zugang 7 vorgesehen, der auch von Pferden genutzt werden kann. Rechts daneben ist ein Futterbereich 6, der sowohl von innen als auch von außen durch die Tiere genutzt werden kann, je nach Witterung. Ganz rechts ist ein Zugang 7 für Personal vorgesehen. Das Traggerüst wird seitlich durch die Seitenwände bzw. Stützen 19 gestützt, und liegt auf dem Tragrahmen auf, der auf den Stützplatten 18 aufliegt.

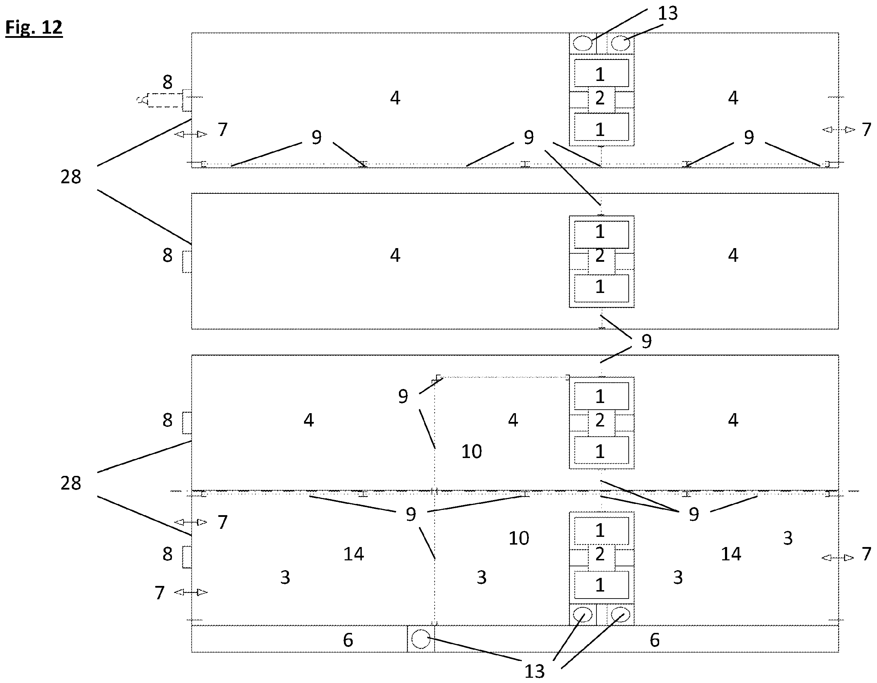

Fig. 12 zeigt einen Grundriss einer mobilen Einrichtung, die aus 4 lösbaren Einrichtungsmodulen 28 für den öffentlichen Straßenbetrieb modular zusammengesetzt wird, wobei die mobile Einrichtung in vier Längsteile geteilt wird, die jeweils für sich einzeln einen Straßentransport ermöglichen. Jedes dieser 4 Teile verfügt über eine eigene Anhängevorrichtung 8 sowie über ein Fahrwerk 2 mit Rädern 1 und kann auf diese Weise mit einem üblichen Traktor auf eine andere Weidefläche gezogen werden.

Die Trennung der einzelnen Module erfolgt an den lösbaren Modulverbindungen 29. Sie halten die einzelnen Module im unzerlegten Zustand zusammen. Die mobilen Trenneinrichtungen 9 bilden die Abtrennungen für die Tiere, und bilden im zerlegten Zustand die Begrenzungen für den Transport, damit die Tiere mitfahren können. Die übrigen Bezugszeichen entsprechen den vorangegangenen Figuren. Gezeigt werden im oberen Teil von Fig. 12 zwei bereits vollständig voneinander getrennte Einrichtungsmodule 28 und im unteren Bereich zwei Einrichtungsmodule 28 kurz vor deren Trennung für anschließenden Transport.

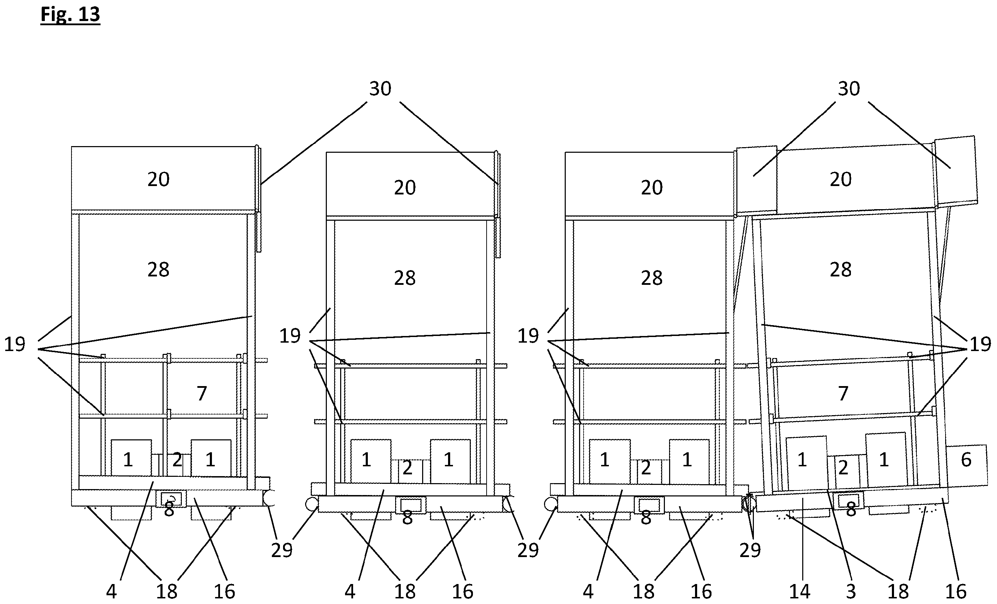

Fig. 13 zeigt die mobile Einrichtung von Fig. 12 aus der Vorderansicht, d.h. aus der Sicht der Zugmaschine, wobei auch die lösbaren Modulverbindungen 29 mit Höhenausgleichsgelenk gezeigt werden, die benötigt werden können, wenn der Weidegrund für die Aufstellung Unebenheiten aufweist. Die beiden links dargestellten Einrichtungsmodule 28 sind bereits voneinander getrennt und befinden sich auf unter- schiedlicher Höhe auf unebenem Grund, die beiden rechts dargestellten Einrichtungsmodule 28 sind noch miteinander verbunden, wobei trotz Neigung die Modulverbindungen 29 gelöst werden können.

Im zusammengebauten Zustand bewirken die höhenvariablen Stützelemente 18 einen Höhenausgleich, vor dem Transport werden diese Stützelemente 18 jedoch eingezogen und das einzelne Einrichtungsmodul 28 steht allein auf seinen Rädern 1 des Fahrwerks 2, wobei die Aufliegerlasten auf die Anhängevorrichtungen 8 möglichst gering gehalten werden, was durch Trimmung nach bekannten Methoden bewirkt werden kann.

Gezeigt wird auch der klappbare Dachüberstand 30, der klappbar ist, damit die höchstzulässige Breite beim Transport nicht überschritten wird. Je nach den Gegebenheiten der Strecke für den Transport kann auch das Dach 20 einklappbar gestalte sein, damit auch Höhenbeschränkungen sicher eingehalten werden können, etwa bei Brückendurchfahrten oder bei Ampeln.

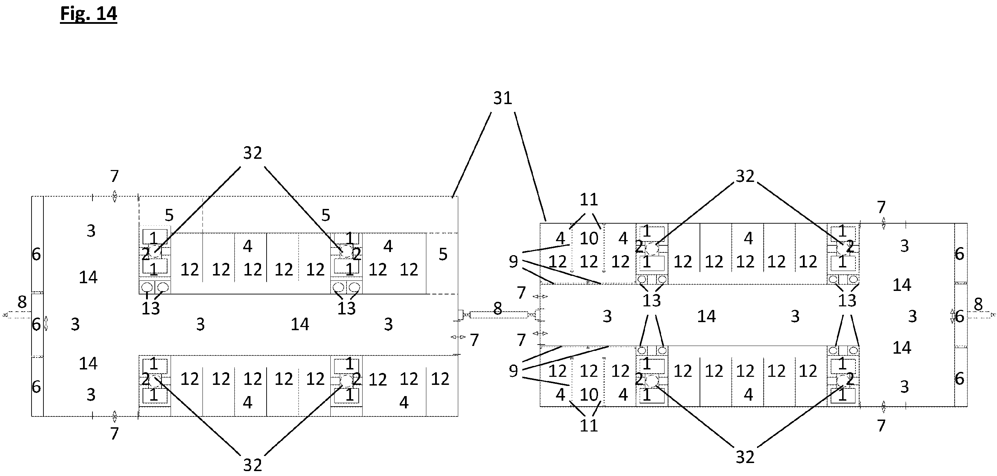

Fig. 14 zeigt einen Grundriss von größeren Einrichtungskombinationen 31, deren Module zwar nicht für den Straßentransport geeignet sind, die aber über große Freiflächen gezogen werden können. Hierbei werden die einzelnen Module in voller Breite ausgeführt, aber in ihrer Länge geteilt. Um eine Navigation zu ermöglichen, werden die Laufwerke 2 als Lenkung 32, in der Regel sind das Nachlaufachsen oder Zwangslenkungen, ausgeführt, wodurch sie lenkbar werden und auch Kurven gefahren werden können. Je nach den aufbringbaren Zugkräften können die Einzelmodule auch über die Anhängevorrichtungen 8 gekuppelt werden und der Transport kann gemeinsam erfolgen. Die erforderlichen Zugkräfte können durch Zugseile und fest installierte hydraulische Winden erzeugt werden, wobei auf eine gute Verankerung zu achten ist.

Selbstverständlich können die Teilungen, die in den Fig. 12 bis 14 dargestellt sind, auch miteinander kombiniert werden, so dass die Module sowohl Quer- als auch Längsteilungen aufweisen.

### Begriffsdefinitionen

Verwendet werden Abstraktionen und Konkretisierungen, teilweise mit denselben Bezugszeichen.
- Unter der Abstraktion "Laufwerk" werden die Konkretisierungen "Reifenlaufwerke" und "Räder" verstanden, Ein schienengebundenes Laufwerk oder ein Raupenlaufwerk wäre ebenfalls "Lauf- werk".
- "Flächen" ist die Abstraktion, "Bereiche" sind Konkretisierungen, die sich von bloßen Flächen dadurch abheben, dass sie abteilbar sind, die übrigen Konkretisierungen sind spezifische Nutzungen für Flächen bzw. Bereiche, wobei das Bezugszeichen 3 für befahrbare Flächen und das Bezugszeichen 4 für nicht befahrbare Flächen steht.
- "Zugang" ist die Abstraktion, "Ein- und Ausgang" die Konkretisierung, wenn ein Zugang in beide Richtungen möglich sein soll, ansonsten nur einer der Begriffe "Eingang" oder "Ausgang", wenn der Zugang nur in eine Richtung erfolgen soll. Der Plural wird verwendet, wenn das Bezugszeichen beispielhaft für mehrere Zugänge gelten soll.
- "Funktionsboden" ist die Abstraktion, "Fachwerk", "Längsträger" und "Querträger" sind beispielhafte Konkretisierungen, aus denen der Funktionsboden gebildet sein kann, aber nicht notwendigerweise sein muss.
- "Stützelemente" ist die Abstraktion, "Auflagen" und "Stützplatten" sind Konkretisierungen.
- "Trenneinrichtungen" ist die Abstraktion, "mobile Trenneinrichtungen", "seitliche Begrenzungen", "Verstrebungen", "Trennwände und "Seitenwände bzw. Stützen" sind Konkretisierungen, die jede für sich Trenneinrichtungen mit speziellen Funktionen sind.

### Liste der Bezugszeichen

- 1: Laufwerk, Reifenlaufwerk, Räder
- 2: Fahrgestell /-werk
- 3: Lauf-, Bewegungs-, und Aktivfläche/ Tretmist- und Entmistungsfläche
- 4: Ruhe-, Liege- und Erholungsfläche
- 5: Melkeinrichtung
- 6: Fütterungsbereich
- 7: Ein- und Ausgang, Zugang
- 8: Anhängevorrichtung
- 9: Mobile Trenneinrichtung für variierbare Funktionsbereiche, Trennwände
- 10: Separationsbereich
- 11: Steckbrett
- 12: Liegeboxen
- 13: Tränke
- 14: Bodenverstärkung für Fahrzeuge und Maschinen
- 15: Längsträger
- 16: Querträger
- 17: Gitterkonstruktion
- 18: Stützelemente
- 19: Seitliche Begrenzungen, Stützen, Verstrebungen
- 20: Dach
- 21: Verstärkungsstreben
- 22: Einzel- und Gruppenboxen
- 23: Fäkaliensammelstelle
- 24: Pflege- und Putzbereich
- 25: Zugänge
- 26: Fenster
- 27: Windschutznetz
- 28: lösbare Einrichtungsmodule für öffentlichen Straßenbetrieb
- 29: lösbare Modulverbindung mit Höhenausgleichsgelenk
- 30: klappbarer Dachüberstand
- 31: Einrichtungskombination
- 32: Lenkung

## Patentansprüche

1. Mobile Einrichtung für Großvieh, aufweisend
• mindestens eine Grundfläche mit einem Boden,
• mindestens vier stabile seitliche Begrenzungen,
• ein Dach (20), welches mindestens die gesamte Grundfläche überdacht,
• einen Rahmen,
• ein Fahrgestell (2) mit mindestens einem Fahrwerk (2), welches an dem Rahmen befestigt ist,
• mindestens eine Vorrichtung zum Versetzen im Zug- oder Schubbetrieb oder durch Eigenantrieb oder als Teilantrieb oder als Zusatzantrieb,
• eine Bremsanlage,
**dadurch gekennzeichnet, dass**
• die Grundfläche durch einen Funktionsboden (15, 16) gebildet wird,
• wobei der Funktionsboden (15, 16) mit dem Rahmen verbunden oder ein Tragwerk des Funktionsbodens (15, 16) als Rahmen ausgebildet ist,
• der Funktionsboden (15, 16) mit festen und/oder arretierbaren und mobilen Trenneinrichtungen (9, 19) in Funktionsbereiche einteilbar oder aufgeteilt ist und dafür im Funktionsboden eine Vielzahl von Aufnahmen für Einsteckmodule vorgesehen ist,
• auf dem Funktionsboden mindestens eine Lauffläche (3) für Tiere und Personal angeordnet ist, die auch von Maschinen und Fahrzeugen befahrbar ist,
• auf dem Funktionsboden mindestens eine Ruhefläche (4) für Tiere eingerichtet ist,
• mehrere variierbare Eingänge (7) und Ausgänge (7) mit Eignung für den eigenständigen Zutritt auf den Funktionsboden für die Tiere eingerichtet sind,
• mindestens eine Einfahrt für Fahrzeuge und mindestens ein Zugang für Personal auf den Funktionsboden vorgesehen ist.

2. Mobile Einrichtung nach Anspruch 1, **dadurch gekennzeichnet, dass** Steckprofile mit Passungen und lösbaren Arretierungen als mobile Trenneinrichtungen (9) vorgesehen sind.

3. Mobile Einrichtung nach Anspruch 2, **dadurch gekennzeichnet, dass** als feste und/oder mobile Trenneinrichtungen (9, 19) Wände, Gitter, Gatter, Stangen, Zaunelemente und Bretter vorgesehen werden.

4. Mobile Einrichtung nach Anspruch 1, **dadurch gekennzeichnet, dass** mindestens eine Hub-Anhebe-Senkvorrichtung vorgesehen ist, mit der die gesamte mobile Einrichtung angehoben oder abgesenkt oder stabilisiert werden kann.

5. Mobile Einrichtung nach Anspruch 1, **dadurch gekennzeichnet, dass** eine Vielzahl von höhenanpassbaren oder festen Stützelementen (18) vorgesehen ist, mit denen die gesamte mobile Einrichtung höhenmäßig angepasst, stabilisiert und ausgerichtet werden kann.

6. Mobile Einrichtung nach einem der Ansprüche 1 bis 5, **dadurch gekennzeichnet, dass** das Tragwerk des Funktionsbodens als Fachwerk (15, 16) samt Gitterkonstruktionen aus flachen, offenen und geschlossenen Profilen oder aus Vollprofilen ausgebildet ist.

7. Mobile Einrichtung nach einem der Ansprüche 1 bis 6, **dadurch gekennzeichnet, dass** mindestens ein Fahrwerk, ein Reifenlaufwerk (1) oder ein Raupenlaufwerk ist und dieses mindestens eine Fahrwerk zwischen Rahmen/Fahrgestell und Funktionsboden oder unter einem Oberboden oder außerhalb der Fläche des Funktionsbodens angeordnet ist.

8. Mobile Einrichtung nach einem der Ansprüche 1 bis 7, **dadurch gekennzeichnet, dass** am Rahmen mindestens eine zum Verfahren geeignete Anhängervorrichtung (8) für Fahrzeuge oder mindestens ein Zusatzantrieb oder Teilantrieb zum Unterstützen einer Zugmaschine oder mindestens eine zum Versetzen durch Seilwinden oder Hydraulik geeignete Vorrichtung oder mindestens ein zum eigenständigen Antrieb geeigneter Antrieb vorgesehen ist.

9. Mobile Einrichtung nach einem der Ansprüche 1 bis 8, **dadurch gekennzeichnet, dass** am Rahmen mindestens eine Vorrichtung zum Lenken oder eine selbstständige Lenkeinrichtung oder eine Nachlauflenkung oder eine Zwangslenkung vorgesehen ist.

10. Mobile Einrichtung nach einem der Ansprüche 1 bis 9, **dadurch gekennzeichnet, dass** am Rahmen arretierbare Längs- und/oder Quergelenke vorgesehen sind.

11. Mobile Einrichtung nach einem der Ansprüche 1 bis 10, **dadurch gekennzeichnet, dass** sie in Module teilbar gestaltet ist.

12. Mobile Einrichtung nach Anspruch 11, **dadurch gekennzeichnet, dass** der Rahmen derart lösbar, teilbar, faltbar, klappbar, teleskopierbar oder einschiebbar ausgebildet ist, dass er auf Straßenbreite reduziert werden kann.

13. Mobile Einrichtung nach einem der Ansprüche 11 oder 12, **dadurch gekennzeichnet, dass** die mobile Einrichtung modulweise hintereinander und/oder nebeneinander kombinierbar ist.

14. Mobile Einrichtung nach einem der Ansprüche 1 bis 13, **dadurch gekennzeichnet, dass** mindestens eine der folgenden Ausstattungen vorgesehen ist:
• Aktiv-, Fress-, Spiel-, Pflege- und Beschäftigungszonen,
• Kranken-, Geburts- und Nachwuchsbereich,
• Einzel- sowie Gemeinschaftsbereiche,
• Einstreubereiche für Stroh, Pellets und Sägemehl oder dergleichen,
• eine Fäkalienaufnahme und -Sammelstelle,
• eine Abwassersammelvorrichtung mit Urin- und Dungsammelbehälter bzw. -Tank,
• eine maschinelle oder automatisierte Entmistung der Tretmist- und Einstreubereiche,
• die Wasser- und Futterversorgung, etwa durch Lagerkapazitäten, Vorräte oder durch Leitungen und/oder Schläuche, die separat an Versorgungsleitungen anschließbar sind, bzw. an/ von Versorgungsstellen oder Versorgungswagen,
• eine Melkeinrichtung, Schereinrichtung, Reit- Putz- und Pflege- und Gesundheitseinrichtung,
• ein Solardach für die Stromversorgung betrieblicher Einrichtungen,
• eine Klimatisierung incl. Heizung und Kühlung mit isolierten Boden-, Wand und Dachelementen, wie beispielsweise Paneelen,
• eine zugluftfreie Belüftung,
• einen Abluftfilter für Schadstoffe,
• eine Regenwasserrückhalte- und Sammelanlage zur Bereitstellung von Reinigungswasser,
• eine Fangvorrichtung für Tiere,
• Raum für Büro, Aufenthalt, Käseherstellung, Schlachtung, Fleischverarbeitung,
• Einrichtungen für Reinigung, Wartung, Reparatur und Desinfektion,
• Schutzeinrichtungen gegen Raubtiere
• Schutz vor Sonnenstrahlung, Wind- und Zugluft, Regen und Schnee,
• Insektenschutz,
• angemessenes Tageslicht und Beleuchtung.

15. Verfahren zur Einrichtung einer mobilen Einrichtung entsprechend einem der Ansprüche 1 bis 14 zur artgerechten Haltung von Großvieh, **dadurch gekennzeichnet, dass** zur Gestaltung und Abtrennung von Funktionsbereichen Einsteckmodule in Aufnahmen des Funktionsbodens arretiert werden, wobei es sich bei den Einsteckmodulen um
• Steckwände,
• Steckbretter
handelt.

16. Verfahren nach Anspruch 15 zur artgerechten Haltung von Großvieh, **dadurch gekennzeichnet, dass** durch Arretieren von mobilen Trenneinrichtungen (9) in die Aufnahmen des Funktionsbodens die Funktionsbereiche
• Erholungs- und Ruheflächen (4)
• Lauf- und Bewegungsflächen (3)
• Geburtsbuchten
gebildet werden.

## Claims

1. A mobile facility for large livestock, comprising:
• at least one base area having a floor,
• at least four stable lateral boundaries,
• a roof (20) covering at least the entire base area,
• a frame,
• a chassis (2) having at least one running gear (2) attached to the frame,
• at least one device for moving the facility by towing or pushing, by means of a self-propelled drive, a partial drive or an additional drive,
• a braking system,
**characterized in that**
• the base area is formed by a functional floor (15, 16),
• the functional floor (15, 16) is connected to the frame or a supporting structure of the functional floor (15, 16) is designed as the frame,
• the functional floor (15, 16) can be divided or subdivided into functional areas by means of fixed and/or lockable and mobile partitioning devices (9, 19), a plurality of receptacles for plug-in modules being provided in the functional floor for this purpose,
• at least one walking area (3) for animals and personnel, which can also be accessed by machinery and vehicles, is arranged on the functional floor,
• at least one resting area (4) for animals is provided on the functional floor,
• a plurality of variable entrances and exits (7), suitable for allowing the animals to independently access the functional floor, are provided,
• at least one entrance for vehicles and at least one access point for personnel to the functional floor are provided.

2. The mobile facility according to claim 1, **characterized in that** plug-in profiles having mating fittings and releasable locking mechanisms are provided as mobile partitioning devices (9).

3. The mobile facility according to claim 2, **characterized in that** walls, grids, gates, bars, fence elements and boards are provided as fixed and/or mobile partitioning devices (9, 19).

4. The mobile facility according to claim 1, **characterized in that** at least one lifting and lowering device is provided, by means of which the entire mobile facility can be raised, lowered or stabilized.

5. The mobile facility according to claim 1, **characterized in that** a plurality of height-adjustable or fixed support elements (18) are provided, by means of which the entire mobile facility can be adjusted in height, stabilized and aligned.

6. The mobile facility according to any one of claims 1 to 5, **characterized in that** the supporting structure of the functional floor is designed as a truss structure (15, 16) comprising lattice constructions made of flat, open and closed profiles or solid profiles.

7. The mobile facility according to any one of claims 1 to 6, **characterized in that** at least one running gear, a wheeled chassis (1) or a crawler chassis is provided, and at least one running gear thereof is arranged between the frame/chassis and the functional floor, beneath an upper floor or outside the area of the functional floor.

8. The mobile facility according to any one of claims 1 to 7, **characterized in that** at least one coupling device (8) for vehicles suitable for moving the facility or at least one auxiliary drive or partial drive for assisting a towing vehicle, or at least one device suitable for moving the facility by means of cable winches or hydraulics, or at least one drive suitable for independent propulsion is provided on the frame.

9. The mobile facility according to any one of claims 1 to 8, **characterized in that** at least one device for steering, or an independent steering device, or a trailing steering system, or a forced steering system is provided on the frame.

10. The mobile facility according to any one of claims 1 to 9, **characterized in that** a lockable longitudinal and/or transverse joint is provided on the frame.

11. The mobile facility according to any one of claims 1 to 10, **characterized in that** it is designed to be divisible into modules.

12. The mobile facility according to claim 11, **characterized in that** the frame is designed to be detachable, divisible, foldable, collapsible, telescopic or retractable in such a manner that it can be reduced in size to a road width.

13. The mobile facility according to either claim 11 or claim 12, **characterized in that** the mobile facility can be combined in a modular manner in succession and/or alongside one another.

14. The mobile facility according to any one of claims 1 to 13, **characterized in that** at least one of the following features is provided:
• activity, feeding, playing, care and occupation zones,
• an area for sick animals, births and offspring,
• individual and communal areas,
• bedding areas for straw, pellets, sawdust or the like,
• a faeces collection and gathering point,
• a wastewater collection device comprising a urine and manure collection container or tank,
• mechanical or automated manure removal from the manure-bedding areas and bedding areasauxilliary,
• a water and feed supply, for example by means of storage capacities, supplies or pipelines and/or hoses which can be connected separately to supply lines or to supply stations or supply vehicles,
• a milking facility, shearing facility, riding, grooming, care and healthcare facility,
• a solar roof for supplying electrical power to operational equipment,
• an air-conditioning system including heating and cooling, with insulated floor, wall and roof elements, such as panels,
• a draught-free ventilation system,
• an exhaust air filter for pollutants,
• a rainwater retention and collection system for providing cleaning water,
• a restraining device for animals,
• space for an office, recreation, cheese production, slaughtering and meat processing,
• facilities for cleaning, maintenance, repair and disinfection,
• protective devices against predators,
• protection against solar radiation, wind and draughts, rain and snow,
• insect protection,
• adequate daylight and lighting.

15. A method for setting up a mobile facility according to any one of claims 1 to 14 for the species-appropriate keeping of large livestock, **characterized in that**, in order to configure and separate functional areas, plug-in modules are locked in receptacles of the functional floor, wherein the plug-in modules are:
• plug-in walls,
• plug-in boards.

16. The method according to claim 15 for the species-appropriate keeping of large livestock, **characterized in that**, by locking mobile partitioning devices (9) in the receptacles of the functional floor, the functional areas are formed as:
• recreation and resting areas (4),
• walking and exercise areas (3),
• birthing pens.

## Revendications

1. Installation mobile destinée aux gros animaux d'élevage, comprenant :
• au moins une surface de base avec un sol,
• au moins quatre délimitations latérales stables,
• un toit (20) couvrant au moins la totalité de la surface de base,
• un cadre,
• un châssis (2) comportant au moins un train de roulement (2), lequel est fixé au cadre,
• au moins un dispositif permettant de déplacer l'installation par traction ou poussée, ou au moyen d'un entraînement autonome, d'un entraînement partiel ou d'un entraînement supplémentaire,
• un système de freinage,
**caractérisée en ce que:**
• la surface de base est formée par un plancher fonctionnel (15, 16),
• le plancher fonctionnel (15, 16) est relié au cadre ou une structure porteuse du plancher fonctionnel (15, 16) est réalisée sous la forme du cadre,
• le plancher fonctionnel (15, 16) peut être divisé ou subdivisé en zones fonctionnelles au moyen de dispositifs de séparation (9, 19) fixes et/ou verrouillables et mobiles, une pluralité de logements destinés à recevoir des modules enfichables étant prévus à cet effet dans le plancher fonctionnel,
• au moins une surface de circulation (3) destinée aux animaux et au personnel, également accessible aux machines et aux véhicules, est agencée sur le plancher fonctionnel,
• au moins une surface de repos (4) destinée aux animaux est aménagée sur le plancher fonctionnel,
• plusieurs entrées et sorties variables (7), adaptées pour permettre aux animaux d'accéder de manière autonome au plancher fonctionnel, sont aménagées,
• au moins une entrée destinée aux véhicules et au moins un accès destiné au personnel sont prévus sur le plancher fonctionnel.

2. Installation mobile selon la revendication 1, **caractérisée en ce que** des profilés enfichables comportant des ajustements et des dispositifs de verrouillage amovibles sont prévus en tant que dispositifs de séparation mobiles (9).

3. Installation mobile selon la revendication 2, **caractérisée en ce que** des parois, des grilles, des portails, des barres, des éléments de clôture et des planches sont prévus en tant que dispositifs de séparation (9, 19) fixes et/ou mobiles.

4. Installation mobile selon la revendication 1, **caractérisée en ce que** au moins un dispositif de levage et d'abaissement est prévu, au moyen duquel l'ensemble de l'installation mobile peut être soulevé, abaissé ou stabilisé.

5. Installation mobile selon la revendication 1, **caractérisée en ce que** une pluralité d'éléments de support (18) réglables en hauteur ou fixes sont prévus, au moyen desquels l'ensemble de l'installation mobile peut être réglé en hauteur, stabilisé et aligné.

6. Installation mobile selon l'une quelconque des revendications 1 à 5, **caractérisée en ce que** la structure porteuse du plancher fonctionnel est réalisée sous la forme d'une structure en treillis (15, 16) comprenant des constructions réticulées constituées de profilés plats, ouverts et fermés ou de profilés pleins.

7. Installation mobile selon l'une quelconque des revendications 1 à 6 **caractérisée en ce que** au moins un train de roulement, un train de roulement à pneumatiques (1) ou un train de roulement à chenilles est prévu et **en ce qu'**au moins un train de roulement de celui-ci est agencé entre le cadre/châssis et le plancher fonctionnel, sous un plancher supérieur ou à l'extérieur de la surface du plancher fonctionnel.

8. Installation mobile selon l'une quelconque des revendications 1 à 7, **caractérisée en ce que** il est prévu sur le cadre au moins un dispositif d'attelage (8) destiné à des véhicules et adapté au déplacement de l'installation, ou au moins un entraînement supplémentaire ou un entraînement partiel destiné à assister un véhicule tracteur, ou au moins un dispositif adapté au déplacement de l'installation au moyen de treuils à câble ou de systèmes hydrauliques, ou au moins un entraînement adapté à une propulsion autonome.

9. Installation mobile selon l'une quelconque des revendications 1 à 8, **caractérisée en ce que** au moins un dispositif de direction, ou un dispositif de direction autonome, ou une direction suiveuse, ou une direction forcée est prévu sur le cadre.

10. Installation mobile selon l'une quelconque des revendications 1 à 9, **caractérisée en ce que** une articulation longitudinale et/ou transversale verrouillable est prévue sur le cadre.

11. Installation mobile selon l'une quelconque des revendications 1 à 10, **caractérisée en ce que** elle est conçue pour être divisible en modules.

12. Installation mobile selon la revendication 11, **caractérisée en ce que** le cadre est réalisé de manière démontable, divisible, pliable, rabattable, télescopique ou rétractable, de telle sorte qu'il puisse être réduit à une largeur compatible avec la circulation routière.

13. Installation mobile selon l'une quelconque des revendications 11 ou 12, **caractérisée en ce que** l'installation mobile peut être combinée de manière modulaire, les modules étant disposés les uns derrière les autres et/ou les uns à côté des autres.

14. Installation mobile selon l'une quelconque des revendications 1 à 13, **caractérisée en ce que** au moins un des équipements suivants est prévu :
• des zones d'activité, d'alimentation, de jeu, de soins et d'occupation,
• une zone destinée aux animaux malades, aux mises bas et aux jeunes animaux,
• des zones individuelles ainsi que des zones communes,
• des zones de litière destinées à la paille, aux granulés, à la sciure de bois ou à des matériaux similaires,
• un dispositif de réception et un point de collecte des matières fécales,
• un dispositif de collecte des eaux usées comprenant un récipient ou un réservoir de collecte d'urine et de fumier,
• une évacuation mécanisée ou automatisée du fumier des zones de circulation sur fumier et des zones de litière,
• un approvisionnement en eau et en aliments, par exemple au moyen de capacités de stockage, de réserves ou de conduites et/ou de tuyaux pouvant être raccordés séparément à des conduites d'approvisionnement ou à des postes d'approvisionnement ou à des véhicules d'approvisionnement,
• une installation de traite, une installation de tonte, une installation d'équitation, de pansage, de soins et de santé,
• un toit solaire destiné à l'alimentation électrique des équipements d'exploitation,
• une climatisation comprenant le chauffage et le refroidissement, avec des éléments de plancher, de paroi et de toiture isolés, tels que des panneaux,
• une ventilation exempte de courants d'air,
• un filtre d'évacuation d'air destiné aux substances nocives,
• une installation de rétention et de collecte des eaux de pluie destinée à fournir de l'eau de nettoyage,
• un dispositif de contention destiné aux animaux,
• un espace destiné à un bureau, au séjour, à la fabrication de fromage, à l'abattage et à la transformation de viande,
• des installations destinées au nettoyage, à l'entretien, à la réparation et à la désinfection,
• des dispositifs de protection contre les prédateurs,
• une protection contre le rayonnement solaire, le vent et les courants d'air, la pluie et la neige,
• une protection contre les insectes,
• un apport approprié de lumière naturelle et un éclairage approprié.

15. Procédé d'aménagement d'une installation mobile selon l'une quelconque des revendications 1 à 14 pour un élevage de gros animaux respectueux des besoins de l'espèce, **caractérisé en ce que**, pour la configuration et la séparation de zones fonctionnelles, des modules enfichables sont verrouillés dans des logements du plancher fonctionnel, lesdits modules enfichables étant constitués de :
• parois enfichables,
• planches enfichables.

16. Procédé selon la revendication 15 pour un élevage de gros animaux respectueux des besoins de l'espèce, **caractérisé en ce que**, par verrouillage de dispositifs de séparation mobiles (9) dans les logements du plancher fonctionnel, les zones fonctionnelles suivantes sont formées :
• des surfaces de détente et de repos (4),
• des surfaces de circulation et de mouvement (3),
• des enclos de mise bas.
